# EUROPÄISCHE PATENTSCHRIFT

(11) **EP 3 183 145 B1**
(45) Veröffentlichungstag und Bekanntmachung des Hinweises auf die Patenterteilung: **30.09.2020**
(21) Anmeldenummer: 15739553.4
(22) Anmeldetag: 15.07.2015
(51) Int. Cl.: B60T 13/66, B60T 13/68, B60T 17/08

(54) **VERFAHREN ZUM STEUERN EINER DURCH EINE BETRIEBSBREMSVENTILEINRICHTUNG BETÄTIGTEN BETRIEBSBREMSEINRICHTUNG SOWIE BETRIEBSBREMSEINRICHTUNG**
METHOD FOR CONTROLLING A SERVICE BRAKE DEVICE ACTUATED BY A SERVICE BRAKE VALVE DEVICE AS WELL AS SERVICE BRAKE DEVICE
PROCÉDÉ DE COMMANDE D'UN DISPOSITIF DE FREIN DE SERVICE ACTIONNÉ PAR UN DISPOSITIF DE SOUPAPE DE FREIN DE SERVICE ET DISPOSITIF DE FREIN DE SERVICE

(30) Priorität: 22.08.2014 DE 102014112015
(43) Veröffentlichungstag der Anmeldung: 28.06.2017
(73) Patentinhaber: KNORR-BREMSE Systeme für Nutzfahrzeuge GmbH, 80809 München (DE)
(72) Erfinder: HERGES, Michael, 80935 München (DE); HECKER, Falk, 71706 Markgröningen (DE); SCHWAB, Frank, 75249 Kieselbronn (DE)
(86) Internationale Anmeldenummer: PCT/EP2015/066092
(87) Internationale Veröffentlichungsnummer: WO 2016/026615

(56) Entgegenhaltungen:
- EP-A1- 0 482 374
- EP-A2- 0 922 618
- EP-A2- 0 949 130
- WO-A1-2009/152981
- DE-A1- 19 653 264
- DE-A1- 19 923 455
- DE-A1-102010 021 909
- DE-B3-102005 062 907
- DE-C1- 19 814 867
- US-A1- 2002 066 628

## Beschreibung

Die Erfindung betrifft ein Verfahren zum Steuern einer durch eine elektropneumatische Betriebsbremsventileinrichtung betätigten elektropneumatischen Betriebsbremseinrichtung, insbesondere eines elektronischen Bremssystems eines Fahrzeugs, gemäß dem Oberbegriff von Anspruch 1.

Außerdem betrifft die Erfindung eine elektropneumatische Betriebsbremseinrichtung, insbesondere ein elektronisches Bremssystem (EBS) eines Fahrzeugs, welches eine elektropneumatische Betriebsbremsventileinrichtung sowie wenigstens eine elektronische Bremssteuereinrichtung zum Steuern von elektropneumatischen Radbremsaktuatoren aufweist, gemäß dem Oberbegriff von Anspruch 10.

Für den zukünftigen Fahrzeugverkehr sind Konzepte geplant, die es ermöglichen, Fahrzeuge im öffentlichen Straßenverkehr auch völlig ohne Fahrereingriff zu bewegen. Dabei sollen mehrere Fahrzeuge automatisch gesteuert mit einem Abstand hintereinander fahren, der geringer als ein eigentlich vorgeschriebener Sicherheitsabstand ist (Platooning). Dies ist nur möglich, wenn durch geeignete Kommunikation zwischen den Fahrzeugen alle gleichzeitig und mit gleicher Verzögerung bremsen können.

Im Rahmen von solchen (teil-)autonomen Fahrzeugkonzepten ist es daher nötig, dass das Fahrzeugbremssystem die Bremsanforderung auf elektronischem Wege erhalten und umsetzen kann und zwar auch dann, wenn ein Fehler innerhalb der elektronischen Steuerung oder Elektrik vorliegt. Daher wird eine fehlertolerante Bremsensteuerung benötigt, so dass beim Auftreten eines einzelnen Fehlers im Bremssystem die Kernfunktion, insbesondere die Betriebsbremswirkung auch ohne Fahrer(eingriff) mindestens über eine gewisse Zeit sichergestellt werden kann bis ein sicherer Systemzustand erreicht ist, beispielsweise zumindest ein Stillstand des Fahrzeugs oder ein geparkter Zustand mit dauerhaft zugespannten Bremsen.

Bei bis zum Zeitpunkt dieser Patentanmeldung in Serie gebauten, elektronischen Bremssystemen (EBS) schaltet deren elektronische Steuereinrichtung beim Auftreten eines Fehlers in dem elektrischen Betriebsbremskreis (z.B. Ausfall der elektrischen Energiequelle oder der elektronischen Steuereinrichtung selbst) ab und auf eine rein pneumatische Backup-Steuerung durch den wenigstens einen pneumatischen Betriebsbremskreis um, mit der allerdings nur der Fahrer das Fahrzeug durch eine Betätigung des Betriebsbremsbetätigungsorgans einbremsen kann. Ein solches System ist für ein oben beschriebenes (teil-)autonomes Fahren nicht geeignet, da bei Auftreten eines solchen schweren Fehlers keine automatisiert gesteuerte Bremsung mehr möglich ist.

Bei einem weiteren, z.B. aus DE 10 2014 107 399 A1 bekannten Bremssystem ist die elektronische Bremsansteuerung zwei- oder mehrkreisig ausgelegt in dem Sinne, dass jeder Bremskreis nur bestimmte Achsen oder Räder bedient. Bei Ausfall einer der Bremskreise ist somit nur noch ein Teil der möglichen Bremswirkung auf elektronischem Wege erzeugbar. Würde ein Bremskreis beispielsweise während einer starken Bremsung eines oben beschriebenen, automatisch gesteuerten Fahrzeugkolonne (Platoon) auftreten, wäre ein Auffahrunfall unvermeidlich.

Bei redundanten Bremssystemen wird die elektronische Bremssteuerung vollständig redundant ausgelegt, d.h. alle elektronischen Systemkomponenten sind jeweils mindestens doppelt vorhanden, wie beispielsweise in DE 10 320 608 A1 beschrieben. Dadurch kann bei Ausfall einer elektronischen Systemkomponente die jeweils noch intakte Systemkomponente die angeforderte Funktion vollständig übernehmen. Ein Nachteil dieser Systemauslegung besteht in der relativ aufwändigen Installation und den hohen Komponenten- und Systemkosten. Dadurch sind derartige Konzepte nur bedingt serientauglich.

Außerdem muss dabei sichergestellt werden, dass keine Fehler in den redundanten Systemen gleichzeitig auftreten.

Ein gattungsgemäßes Verfahren bzw. eine gattungsgemäße elektropneumatische Betriebsbremseinrichtung ist in WO 2009/152981 A1 offenbart.

Die Aufgabe der Erfindung besteht darin, eine fehlertolerante Bremsensteuerung auf möglichst kostengünstige Art darzustellen.

Diese Aufgabe wird durch ein Verfahren nach Patentanspruch 1 sowie durch eine Einrichtung nach Patentanspruch 10 gelöst.

### Offenbarung der Erfindung

Die Erfindung baut auf einer aus dem Stand der Technik bekannten elektropneumatischen Betriebsbremsventileinrichtung mit beispielsweise zwei pneumatischen Kanälen auf, welche beispielsweise einem Vorderachsbremskreis und einem pneumatischen Hinterachsbremskreis steuern, sowie einem elektrischen Kanal, welcher einen vorrangigen elektrischen Bremskreis steuert, wobei die beiden pneumatischen Bremskreise redundant verwendet werden. Solche elektropneumatische Betriebsbremsventileinrichtungen oder Fußbremsmodule werden üblicherweise für elektro-pneumatische Betriebsbremseinrichtungen oder elektronische Bremssysteme (EBS) verwendet, um eine Fahrerbremsanforderung für den elektrischen Betriebsbremskreis und für die beiden pneumatischen Betriebsbremskreise als elektrisches Signal bzw. als pneumatische Signale auszusteuern.

Solche elektropneumatischen Betriebsbremsventileinrichtungen des Stands der Technik weisen innerhalb ihres elektrischen Betriebsbremskreises wenigstens eine elektronische Steuereinrichtung auf, welche die von wenigstens einem Betriebsbremswertgeber (z.B. Potentiometer oder berührungsloser Sensor) aufgrund einer Betätigung des Betriebsbremsbetätigungsorgans erzeugten Signale als elektrische Fahrerbremsanforderungssignale aufbereitet und an eine Schnittstelle aussteuert, welche über einen Kommunikationspfad, z.B. einen Datenbus mit der elektronischen Steuereinrichtung der elektropneumatischen Betriebsbremseinrichtung kommuniziert, damit diese auf der Basis der elektrischen Fahrerbremsanforderungssignale und gegebenenfalls nach Anpassung, z.B. achslastabhängig, elektropneumatische Modulatoren ansteuert, welche dann einen entsprechenden Bremsdruck in den pneumatischen Bremsaktuatoren erzeugen.

Bei einem Fehler oder einem Ausfall des elektrischen Betriebsbremskreises, sei es in dessen elektrischer Energieversorgung, in dessen elektronischer Bremssteuereinrichtung oder in dessen elektropneumatischen Modulatoren, findet die Bremsdruckerzeugung in den pneumatischen Bremsaktuatoren (z.B. pneumatische Radbremszylinder) mittels der pneumatischen Betriebsbremskreise als Redundanz für den ausgefallenen elektrischen Betriebsbremskreis statt.

Allen diesen Betriebsbremsventileinrichtungen des Stands der Technik ist gemeinsam, dass sie in ihren pneumatischen Kanälen, an welche jeweils ein pneumatischer Betriebsbremskreis angeschlossen ist bzw. welche selbst Teil dieser pneumatischen Betriebsbremskreise sind, lediglich einen von einer Betätigung des Bremsbetätigungsorgans durch den Fahrer, beispielsweise eines Fußbremspedals abhängigen Bremsdruck oder Bremssteuerdruck erzeugen.

Bei dem Verfahren gemäß der Erfindung wird demgegenüber der wenigstens eine Steuerkolben der Betriebsbremsventileinrichtung außer durch die erste Betätigungskraft bei Vorliegen einer vom Fahrerwunsch unabhängigen Bremsanforderung zusätzlich durch eine zweite Betätigungskraft oder anstatt der ersten Betätigungskraft durch eine zweite Betätigungskraft belastet, welche in Bezug zur ersten Betätigungskraft parallel und gleichsinnig oder gegensinnig auf den wenigstens einen Steuerkolben wirkt und unabhängig von einer Fahrerbremsanforderung auf der Basis von durch die elektronische Steuereinrichtung der Betriebsbremsventileinrichtung ausgesteuerten elektrischen Signalen erzeugt wird.

Bei der elektropneumatischen Betriebsbremseinrichtung gemäß der Erfindung sind die elektronische Steuereinrichtung der elektropneumatischen Betriebsbremsventileinrichtung beinhaltende Mittel zum Erzeugen einer zweiten Betätigungskraft unabhängig von einer Fahrerbremsanforderung vorgesehen, welche bei Vorliegen einer vom Fahrerwunsch unabhängigen Bremsanforderung in Bezug zur ersten Betätigungskraft parallel und gleichsinnig oder gegensinnig auf den wenigstens einen Steuerkolben wirkt.

Mit anderen Worten wirken auf den Steuerkolben der Betriebsbremsventileinrichtung die erste, von einer Fahrerbremsanforderung abhängige Betätigungskraft und/oder bei Vorliegen einer vom Fahrerwunsch unabhängigen Bremsanforderung die zweite Betätigungskraft in paralleler Weise, wobei die zweite Betätigungskraft auf der Basis von durch die elektronische Steuereinrichtung der Betriebsbremsventileinrichtung ausgesteuerten elektrischen Signalen erzeugt wird. Folglich vermögen entweder beide Betätigungskräfte (erste und zweite Betätigungskraft) zusammen oder auch jede Betätigungskraft einzeln für sich ohne Vorhandensein der jeweils anderen Betätigungskraft den Steuerkolben und damit auch das Doppelsitzventil des Betriebsbremsventils zu betätigen. Dabei können die beiden Betätigungskräfte gleichsinnig, d.h. in gleicher Richtung auf den Steuerkolben wirken als auch gegensinnig, d.h. in entgegengesetzter Richtung.

Die erste, abhängig von einer Fahrerbremsanforderung erzeugte Betätigungskraft wirkt auf den wenigstens einen Steuerkolben stets in der gleichen Richtung, nämlich bedingt durch die Betätigungsrichtung des Bremsbetätigungsorgans in Richtung Öffnen des Auslasssitzes des Doppelsitzventils zum Belüften des wenigstens einen Betriebsbremskreises, so dass die Begriffe "gleichsinnig" bzw. "gegensinnig" in Bezug zur Wirkungsrichtung der ersten Betätigungskraft klar definiert sind. Dabei ist klar, dass im Falle einer mangels Fahrerbremsanforderung nicht vorhandenen ersten Betätigungskraft deren Wirkrichtung auf den wenigstens einen Steuerkolben lediglich gedacht ist, um eine Referenz für die hierzu dann parallele Wirkrichtung der zweiten Betätigungskraft angeben zu können.

Damit ergeben sich neue Steuerungsmöglichkeiten der elektropneumatischen Betriebsbremseinrichtung, indem nun der wenigstens eine pneumatische Betriebsbremskreis neben einer Betätigung durch den Fahrer nun auch elektrisch oder elektronisch und damit ohne Zutun des Fahrers bei Vorliegen einer Bremsanforderung automatisiert betätigt werden kann. Die Steuerung oder Regelung des wenigstens einen pneumatischen Betriebsbremskreises der elektropneumatischen Betriebsbremseinrichtung durch die elektronische Steuereinrichtung der Betriebsbremsventileinrichtung kann dann durch beliebige elektrische Steuersignale eines beliebigen Fahrzeugsystems bzw. einer beliebigen "Autorität" erfolgen, welche eine Bremsanforderung erzeugen kann.

Die mit einem solchen Verfahren bzw. mit einer solchen Betriebsbremseinrichtung erzielbaren Vorteile liegen grundsätzlich darin, dass innerhalb des eigentlich pneumatischen Kanals einer elektropneumatischen Betriebsbremsventileinrichtung oder eines Fußbremsmoduls Bremsdrücke bzw. Bremssteuerdrücke für pneumatische Betriebsbremskreise unabhängig von einer Fahrerbremsanforderung automatisch erzeugt werden können.

Damit können insbesondere bereits in der Betriebsbremsventileinrichtung, d.h. an zentraler Stelle und für alle an die Betriebsbremsventileinrichtung angeschlossenen pneumatischen Betriebsbremskreise entsprechende Bremsdrücke ohne Zutun bzw. Einflussnahme des Fahrers insbesondere dann erzeugt werden, wenn ein Fehler oder ein Ausfall des elektrischen Bremskreises der elektropneumatischen Betriebsbremseinrichtung, insbesondere in dessen elektrischer Energieversorgung, in dessen elektronischer Bremssteuereinrichtung oder in dessen elektropneumatischen Modulatoren festgestellt wurde. Dadurch steht auch bei einem Fehler oder Ausfall des elektrischen Betriebsbremskreises ein weiterer elektrischer Betriebsbremskreis zur Verfügung, der dann von der elektronischen Steuereinrichtung der Betriebsbremsventileinrichtung gesteuert wird.

Damit wird die Voraussetzung geschaffen, dass durch geringfügige Änderungen einer elektropneumatischen Betriebsbremsventileinrichtung des Stands der Technik deren Funktionalität vorteilhaft im Sinne einer automatischen, ohne Zutun des Fahrers bewirkten Bremsensteuerung erweitert wird, indem deren elektronische Steuereinrichtung um Steuer- oder Regelalgorithmen ergänzt wird, durch welche dann die zweite Betätigungskraft mit Hilfe eines vorzugsweise zusätzlich vorzusehenden elektrischen, elektrohydraulischen oder elektropneumatischen Aktuators erzeugbar ist, der von der elektronischen Steuereinrichtung des Fußbremsmoduls angesteuert wird.

Eine mit einer solchen Betriebsbremsventileinrichtung versehene Betriebsbremseinrichtung reagiert dann bei einer automatischen (Fremd-) Betätigung wie bei einer Fahrerbremsanforderung, beispielsweise im Hinblick auf die Bremskraftverteilung oder die Steuerung der Anhängerbremsen.

Das erfindungsgemäße Verfahren bzw. die erfindungsgemäße elektropneumatische Betriebsbremseinrichtung ist dann insbesondere für ein oben beschriebenes (teil-)autonomes Fahren des Fahrzeugs innerhalb einer Fahrzeugkolonne geeignet, da bei Auftreten eines Fehlers in dem elektrischen Betriebsbremskreis eine automatisiert gesteuerte Bremsung noch über den wenigstens einen pneumatischen Betriebsbremskreis möglich ist.

Weiterhin wird mit der Erfindung die vom Gesetzgeber bei Fahrzeugbremsen geforderte Fehlertoleranz erfüllt. Da darüber hinaus mit der Erfindung ein zusätzlicher wenigstens teilweise elektrischer Betriebsbremskreis geschaffen wird, dessen elektrischer Anteil sich bis zu dem Aktuator erstreckt, der die zweite Betätigungskraft erzeugt, liegen in Bezug zu dem wenigstens einen pneumatischen Betriebsbremskreis unterschiedlich aufgebaute Bremskreise vor, wobei dann die Gefahr reduziert wird, dass dann beide Bremskreise von einem identischen oder gleichartigen Fehler außer Betrieb gesetzt werden. Mithin ist mit dem zusätzlichen (teil-)elektrischen Betriebsbremskreis möglich, die maximale zur Verfügung stehende Bremsleistung auszusteuern, da sich der wenigstens eine pneumatische Betriebsbremskreis des vollen Vorratsdrucks aus einem Druckluftvorrat bedienen kann. Nicht zuletzt können bestehende elektropneumatische Betriebsbremseinrichtungen einfach durch Austausch der Betriebsbremsventileinrichtung mit der Erfindung ausgestattet werden, ohne dass eine Änderung der elektrischen Verkabelung oder pneumatischen Verrohrung am Fahrzeug vorgenommen werden muss.

Wesentlich bei der Erfindung ist auch, dass der Fahrer die durch die zweite Betätigungskraft bewirkte Bremsanforderung jederzeit durch eine Betätigung des Bremsbetätigungsorgans der Betriebsbremsventileinrichtung übersteuern kann, weil dann parallel zu der zweiten Betätigungskraft die auf der Fahrerbremsanforderung basierende erste Betätigungskraft auf den wenigstens einen Steuerkolben aufgebracht wird, welche unter Umständen größer als die zweite Betätigungskraft und auch dieser entgegen gerichtet ist.

Es versteht sich, dass im Falle mehrerer pneumatischer Kanäle der Betriebsbremsventileinrichtung auch mehr als nur ein einziger Steuerkolben durch die zweite Betätigungskraft belastet werden kann bzw. auch nur ein einziger Steuerkolben, welcher dann die zweite Betätigungskraft auf einen weiteren Betätigungskolben überträgt.

Die Erfindung bezieht sich auch auf ein Fahrzeug mit einer elektropneumatischen Betriebsbremseinrichtung, welche wenigstens einen pneumatischen Betriebsbremskreis sowie eine oben beschriebene Betriebsbremsventileinrichtung beinhaltet.

Durch die in den Unteransprüchen aufgeführten Maßnahmen sind vorteilhafte Weiterbildungen und Verbesserungen der in den nebengeordneten Ansprüchen angegebenen Erfindung möglich.

Die zweite Betätigungskraft kann auf der Basis der durch die elektronische Steuereinrichtung der Betriebsbremsventileinrichtung ausgesteuerten elektrischen Signale elektropneumatisch, elektrohydraulisch und/oder elektromechanisch erzeugt werden. Denkbar sind dabei dann Ausführungsformen, bei denen die zweite Betätigungskraft mit Hilfe eines elektropneumatischen, elektrohydraulischen oder elektromechanischen Aktuators wie z.B. Magnetventil, Elektromotor usw. erzeugt werden, welcher dann direkt oder indirekt auf den wenigstens einen Steuerkolben der Betriebsbremsventileinrichtung wirkt.

Besonders bevorzugt wird die zweite Betätigungskraft aber elektro-pneumatisch unter bestmöglicher Nutzung der bereits vorhandenen Verhältnisse an der Betriebsbremsventileinrichtung erzeugt. Insbesondere wird die zweite Betätigungskraft mittels einer von einer elektronischen Steuereinrichtung gesteuerten elektropneumatischen Magnetventileinrichtung pneumatisch erzeugt, indem ein von der elektropneumatischen Magnetventileinrichtung auf ein Signal der elektronischen Steuereinrichtung der Betriebsbremsventileinrichtung hin ausgesteuerter Steuerdruck auf den wenigstens einen Steuerkolben direkt oder indirekt wirkt. Dieser Steuerdruck erzeugt dann an dem wenigstens einen Steuerkolben die zweite Betätigungskraft.

Vorzugsweise wird der von der elektropneumatischen Magnetventileinrichtung ausgesteuerte Steuerdruck mittels einer Sensorik gemessen und durch Abgleich mit einem Sollwert in der elektronischen Steuereinrichtung geregelt. Dabei bilden die Sensorik, die Magnetventileinrichtung zusammen mit der elektronischen Steuereinrichtung der Betriebsbremsventileinrichtung einen Steuerdruckregler.

Ganz allgemein ist vorzugsweise vorgesehen, dass die auf den wenigstens einen Steuerkolben wirkende zweite Betätigungskraft, ein von der zweiten Betätigungskraft herrührender Betätigungsweg des wenigstens einen Steuerkolbens der Betriebsbremsventileinrichtung und/oder eine die zweite Betätigungskraft erzeugende Größe, z.B. der oben erwähnte pneumatische Steuerdruck als Ist-Größe gemessen und mit einer Soll-Größe im Sinne einer Regelung abgeglichen wird. Mit Hilfe der hier optionalen Regelung der zweiten Betätigungskraft oder einer der mit ihr in Zusammenhang stehenden obigen Größen kann die Genauigkeit der Bremsdruckeinstellung erhöht werden.

Zur Realisierung einer solchen Regelungsfunktion können Sensormittel vorgesehen werden, durch welche die auf den wenigstens einen Steuerkolben wirkende zweite Betätigungskraft, ein von der zweiten Betätigungskraft herrührender Betätigungsweg des wenigstens einen Steuerkolbens und/oder eine die zweite Betätigungskraft erzeugende Größe als Ist-Größe gemessen wird, sowie Regelungs- und Stellmittel, durch welche die Ist-Größe mit einer Soll-Größe im Sinne einer Regelung abgeglichen wird.

Der der von der elektropneumatischen Magnetventileinrichtung ausgesteuerte pneumatische Steuerdruck steht insbesondere in wenigstens einer Steuerkammer an, welche von dem wenigstens einen Steuerkolben der Betriebsbremsventileinrichtung begrenzt ist, wobei die Steuerkammer in der Betriebsbremsventileinrichtung derart angeordnet ist, dass sie bei Belüftung eine in Bezug zur ersten Betätigungskraft bevorzugt gleichsinnige oder auch gegensinnige zweite Betätigungskraft an dem wenigstens einen Steuerkolben bewirkt. Diese Maßnahmen bedingen lediglich geringfügige bauliche Änderungen an einer Betriebsbremsventileinrichtung des Stands der Technik.

In manchen Fällen kann es wünschenswert oder notwendig sein, dass der durch die erste Betätigungskraft auf den Steuerkolben repräsentierte Fahrerbremswunsch auch durch Erzeugen einer entsprechend großen und entgegen wirkenden zweiten Betätigungskraft übersteuert wird, beispielsweise dann, wenn der Fahrer bei einer oben beschriebenen Kolonnenfahrt mit jeweils geringem Abstand zu dem vorausfahrenden und nachfolgenden Fahrzeug plötzlich eine Vollbremsung einleiten möchte, wodurch die Gefahr eines Auffahrunfalls entstehen würde.

Für eine möglichst einfache Realisierung einer solchen Funktionalität kann weiterhin eine erste Steuerkammer in Bezug zu dem wenigstens einen Steuerkolben derart angeordnet sein, dass durch Belüftung der ersten Steuerkammer eine zweite, in Bezug auf die erste Betätigungskraft gleichsinnige Betätigungskraft auf den wenigstens einen Steuerkolben erzeugt wird. Zusätzlich wird aber eine zweite Steuerkammer derart angeordnet, dass durch Belüftung der zweiten Steuerkammer eine zweite, in Bezug auf die erste Betätigungskraft gegensinnige Betätigungskraft auf den wenigstens einen Steuerkolben erzeugt wird.

Dabei kann bevorzugt vorgesehen werden, dass die erste Steuerkammer mittels einer ersten Magnetventileinrichtung oder mittels eines ersten Steuerdruckreglers und die zweite Steuerkammer, unabhängig davon, mittels einer zweiten Magnetventileinrichtung oder mittels eines zweiten Steuerdruckreglers be- oder entlüftbar ist.

Nicht zuletzt kann der wenigstens eine Steuerkolben ein Doppelkolben mit zwei durch eine Kolbenstange verbundenen Kolben sein, von denen ein erster Kolben die erste Steuerkammer und von denen ein zweiter Kolben die zweite Steuerkammer begrenzt, wobei die erste Steuerkammer und die zweite Steuerkammer an voneinander weg weisenden Flächen einer Innenwandung der Betriebsbremsventileinrichtung grenzen, welche von der Kolbenstange dichtend durch ragt wird.

Mittels der Betriebsbremsventileinrichtung wird bevorzugt für jeden pneumatischen Betriebsbremskreis auf der Basis der zweiten Betätigungskraft ein (optional durch eine Regelung beeinflusster) Bremsdruck oder Bremssteuerdruck erzeugt und dieser Bremsdruck oder Bremssteuerdruck in zwischen der Betriebsbremsventileinrichtung und den Radbremsen gezogenen Bremsdruckleitungen eingesteuert, um an diese Bremsdruckleitungen angeschlossene Radbremszylinder zu be- oder entlüften.

Besonders bevorzugt wird eine solche zweite Betätigungskraft erzeugt, wenn ein Fehler oder ein Ausfall des elektrischen Betriebsbremskreises der elektropneumatischen Betriebsbremseinrichtung festgestellt worden ist und wenn eine Bremsanforderung vorliegt. Von einem solchen Fehler oder Ausfall kann insbesondere die elektronische Bremssteuereinrichtung, wenigstens ein elektropneumatischer Achsmodulator oder auch der elektrische Kanal des elektropneumatischen Betriebsbremsventils betroffen sein. Denkbar ist aber auch ein Ausfall der elektrischen Energieversorgung des elektrischen Betriebsbremskreises.

Ein Ausfall oder ein Fehler des elektrischen Betriebsbremskreises wird insbesondere im Rahmen einer Selbstüberwachung durch die elektronische Bremssteuereinrichtung der elektropneumatischen Betriebsbremseinrichtung selbst oder im Rahmen einer Fremdüberwachung durch die elektronische Steuereinrichtung der elektropneumatischen Betriebsbremsventileinrichtung festgestellt. Denkbar ist aber auch eine Fremdüberwachung durch eine elektronische Steuereinrichtung eines beliebigen dritten Systems. Da in der Regel alle oder die meisten elektronischen Steuereinrichtungen der vorhandenen Fahrzeugbremssysteme (Elektropneumatische Betriebsbremse bzw. elektropneumatische Feststellbremse) bzw. Fahrzeugsysteme ohnehin über einen Fahrzeugdatenbus miteinander kommunizieren, ist eine solche Überwachung einfach realisierbar.

Bei festgestelltem Ausfall oder Fehler des elektrischen Betriebsbremskreises der elektropneumatischen Betriebsbremseinrichtung wird dann mit Hilfe des wenigstens einen pneumatischen Kanals der Betriebsbremsventileinrichtung in dem wenigstens einen pneumatischen Betriebsbremskreis auf der Basis der zweiten Betätigungskraft ein Bremsdruck oder ein Bremssteuerdruck erzeugt und in die pneumatischen Radbremsaktuatoren eingesteuert, so dass das Fahrzeug (wenigstens einmal) sicher abgebremst werden kann.

Um eine größtmögliche Unabhängigkeit des mittels der Erfindung hinzugekommenen zusätzlichen (teil-)elektrischen Betriebsbremskreises zu gewährleisten, ist besonders bevorzugt vorgesehen, dass die elektronische Bremssteuereinrichtung der elektropneumatischen Betriebsbremseinrichtung von einer ersten elektrischen Energiequelle mit elektrischer Energie versorgt wird, welche dann Bestandteil des elektrischen Betriebsbremskreises ist und unabhängig von einer zweiten elektrischen Energiequelle ist, welche die elektronische Steuereinrichtung der Betriebsbremsventileinrichtung mit elektrischer Energie versorgt, die den zusätzlichen (teil-)elektrischen Betriebsbremskreis steuert. In diesem Fall bleibt der zusätzliche (teil-)elektrischen Betriebsbremskreis auch dann funktionsfähig, wenn von dem Ausfall oder dem Fehler des elektrischen Betriebsbremskreises die erste elektrische Energieversorgung betroffen ist. Dadurch wird beispielsweise ein unabhängiger und eigener Stromkreis bzw. für den zusätzlichen (teil-)elektrischen Betriebsbremskreis und insbesondere für die elektronische Steuereinrichtung der Betriebsbremsventileinrichtung gebildet. Dieser unabhängige und eigene Stromkreis ist dann Bestandteil der elektropneumatische Betriebsbremseinrichtung.

Alternativ kann dieser Stromkreis einem anderen Fahrzeugsystem zugeordnet sein, wie beispielsweise eine elektrischen Lenkeinrichtung, einem elektropneumatischen Luftfederungseinrichtung oder bei Hybrid- oder elektrisch angetriebenen Fahrzeugen durch den Stromkreis des elektrischen Antriebs gebildet werden.

Die diesem Stromkreis zugeordnete zweite elektrische Energiequelle kann beispielsweise durch eine separate Batterie, (Doppelschicht-) Kondensatoren, einen weiteren Energiespeicher oder auch ein eigenes Stromerzeugungsgerät (z.B. druckluftbetriebener Generator) dargestellt werden. Da die notwendige Betriebszeit bei Ausfall des elektrischen Betriebsbremskreises darauf begrenzt ist, dass ein sicherer Zustand erreicht wird ist eine relativ kleine zweite Energiequelle ausreichend.

Die zweite Energiequelle wird bevorzugt auf Ladekapazität und Funktionsfähigkeit überwacht (SOC, SOH, regelmäßiges Laden/Entladen). Die kann beispielsweise mittels der elektronischen Bremssteuereinrichtung der elektropneumatischen Betriebsbremseinrichtung, die Steuereinrichtung der Betriebsbremsventileinrichtung oder mittels eines sonstigen Systems wie z.B. die Batterieüberwachung einer Hybridantriebssteuerung erfolgen.

Zur Realisierung der oben beschriebenen Funktionalitäten kann die elektronische Steuereinrichtung der Betriebsbremsventileinrichtung eine Schnittstelle aufweisen, durch welche Signale einsteuerbar sind, auf deren Basis die elektronische Steuereinrichtung der Betriebsbremsventileinrichtung elektrische Signale zum Erzeugen der zweiten Betätigungskraft bildet.

Insbesondere kann die Bremssteuereinrichtung der elektropneumatischen Betriebsbremseinrichtung über einen elektrischen Kommunikationspfad, insbesondere über einen Datenbus an die Schnittstelle der elektronischen Steuereinrichtung der Betriebsbremsventileinrichtung angeschlossen sein, um ein einen durch Eigenüberwachung oder Fremdüberwachung des elektrischen Betriebsbremskreises festgestellten Defekt in diesem elektrischen Betriebsbremskreis repräsentierendes Signal in die Steuereinrichtung der Betriebsbremsventileinrichtung einzusteuern, woraufhin diese dann bei Vorliegen einer vom Fahrerwunsch unabhängigen Bremsanforderung elektrische Signale zum Erzeugen der zweiten Betätigungskraft aussteuern kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Nachstehend sind Ausführungsbeispiele der Erfindung in der Zeichnung dargestellt und in der nachfolgenden Beschreibung näher erläutert. In der Zeichnung zeigt
- Fig.1a: eine schematische Querschnittsdarstellung einer Betriebsbremsventileinrichtung einer elektro-pneumatischen Betriebsbremseinrichtung eines Fahrzeugs gemäß einer bevorzugten Ausführungsform der Erfindung in einer Stellung "Fahren";
- Fig.1b: eine schematische Querschnittsdarstellung einer Betriebsbremsventileinrichtung einer elektro-pneumatischen Betriebsbremseinrichtung eines Fahrzeugs gemäß einer weiteren Ausführungsform der Erfindung in einer Stellung "Fahren";
- Fig.2a: die Betriebsbremsventileinrichtung von Fig.1a in einer Stellung "Fahrerbremsung ohne automatische Bremsung";
- Fig.2b: die Betriebsbremsventileinrichtung von Fig.2a in einer Stellung "Fahrerbremsung ohne automatische Bremsung";
- Fig.3a: die Betriebsbremsventileinrichtung von Fig.1a in einer Stellung "Automatische Bremsung ohne Fahrerbremsung";
- Fig.3b: die Betriebsbremsventileinrichtung von Fig.1b in einer Stellung "Automatische Bremsung ohne Fahrerbremsung";
- Fig.4a: die Betriebsbremsventileinrichtung von Fig.1a in einer Stellung "Automatische Bremsung und Fahrerbremsung";
- Fig.4b: die Betriebsbremsventileinrichtung von Fig.1b in einer Stellung "Automatische Bremsung und Fahrerbremsung";
- Fig.5: eine schematische Querschnittsdarstellung einer Betriebsbremsventileinrichtung einer elektro-pneumatischen Betriebsbremseinrichtung eines Fahrzeugs gemäß einer weiteren Ausführungsform der Erfindung in einer Stellung "Rückhalten einer Fahrerbremsung";
- Fig.6: eine schematische Querschnittsdarstellung einer Betriebsbremsventileinrichtung einer elektro-pneumatischen Betriebsbremseinrichtung eines Fahrzeugs gemäß einer weiteren Ausführungsform der Erfindung;
- Fig.7: eine schematische Querschnittsdarstellung einer Betriebsbremsventileinrichtung einer elektro-pneumatischen Betriebsbremseinrichtung eines Fahrzeugs gemäß einer weiteren Ausführungsform der Erfindung;
- Fig.8: eine schematische Querschnittsdarstellung einer Betriebsbremsventileinrichtung einer pneumatischen oder elektropneumatischen Betriebsbremseinrichtung eines Fahrzeugs gemäß einer weiteren Ausführungsform der Erfindung;
- Fig.9a bis 9c: Ausführungsformen von Magnetventileinrichtungen, durch welche ein pneumatischer Steuerdruck zur Erzeugung einer Betätigungskraft für einen Steuerkolben der Betriebsbremsventileinrichtung erzeugbar ist;
- Fig. 10: einen schematischen Schaltplan einer bevorzugten Ausführungsform einer elektropneumatischen Betriebsbremseinrichtung gemäß der Erfindung mit einer Betriebsbremsventileinrichtung gemäß Fig. 1a, 1b, 5, 6 oder 7.

### Beschreibung der Ausführungsbeispiele

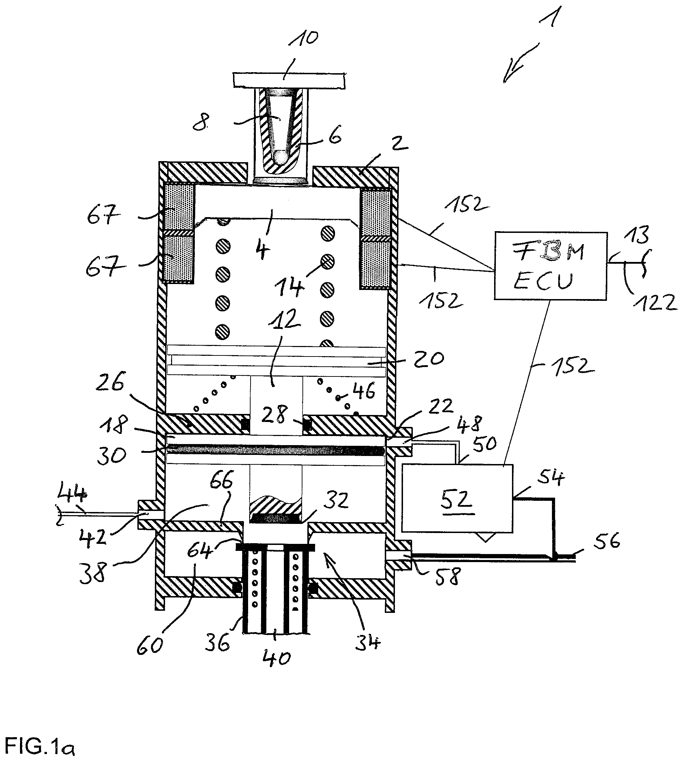

Fig.1a zeigt eine schematische Querschnittsdarstellung einer Betriebsbremsventileinrichtung 1 einer elektro-pneumatischen Betriebsbremseinrichtung eines Fahrzeugs gemäß einer bevorzugten Ausführungsform der Erfindung in einer Stellung "Fahren".

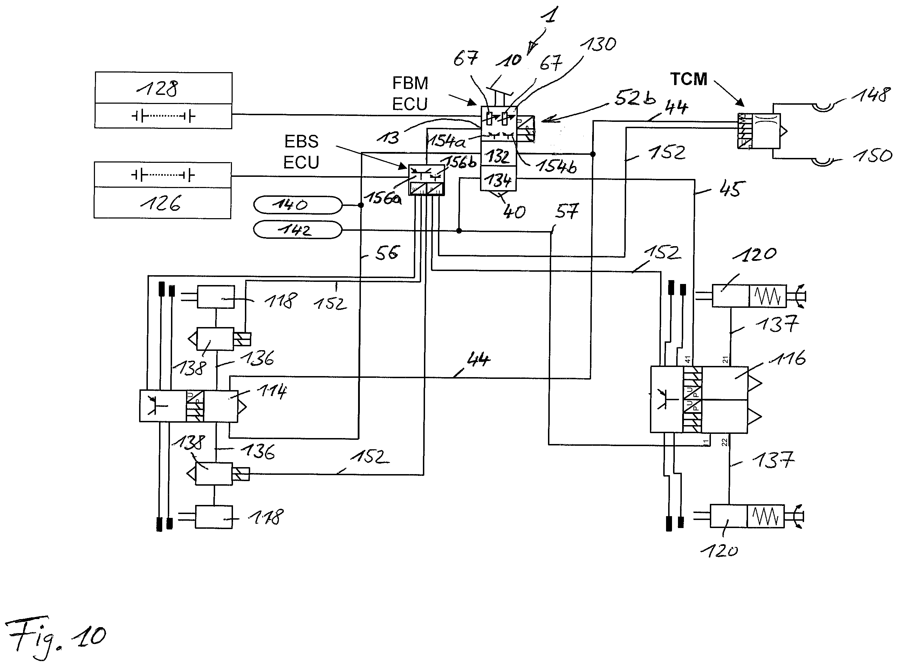

Die Betriebsbremsventileinrichtung 1 hat aus zeichnerischen Vereinfachungsgründen lediglich einen pneumatischen Betriebsbremskreis bzw. einen pneumatischen Kanal 132 bzw. 134, weist aber in der Realität bevorzugt zwei pneumatische Betriebsbremskreise bzw. zwei pneumatische Kanäle 132, 134 auf (siehe Fig.10). Zusätzlich zu den peumatischen Betriebsbremskreisen bzw. den pneumatischen Kanälen 132, 134 ist ein elektrischer Betriebsbremskreis bzw. ein elektrischer Kanal 130 mit einem hier beispielsweise berührungslosen Wegaufnehmer oder Bremswertgeber 67 zur Messung des Betätigungswegs eines Betriebsbremsbetätigungsorgans 10 vorhanden sein. Bei einer solchen elektropneumatischen Betriebsbremsventileinrichtung 1 spricht man auch von einem sog. Fußbremsmodul.

Die Betriebsbremsventileinrichtung 1 wird bevorzugt in der elektropneumatischen Betriebsbremseinrichtung 124 gemäß Fig.10 eingesetzt, welche ein elektronisches Bremssystem (EBS) mit Bremsdruckregelung darstellt, um einerseits in zwei nachrangigen pneumatischen (Backup-)Betriebsbremskreisen jeweils einen pneumatischen Backup-Bremssteuerdruck und andererseits in einem vorrangigem elektrischen Betriebsbremskreis ein von einer Bremsanforderung abhängiges elektrisches Signal in ein elektronisches Betriebsbremssteuergerät EBS-ECU und von dort, evtl. angepasst oder korrigiert, in nachgeordnete elektropneumatische Druckregelmodule 114, 116 einzusteuern, welche abhängig von diesen elektrischen, Soll-Bremsdrücke repräsentierenden Signalen einen entsprechenden Ist-Bremsdruck an Radbremszylinder 118, 120 der jeweils zugeordneten Achse (Vorderachse, Hinterachse) aussteuern.

Solche elektropneumatischen Druckregelmodule 114, 116 sind hinlänglich bekannt und beinhalten neben einem Backup-Magnetventil, welches den zugeordneten Backup-Bremssteuerdruck bei intaktem elektro-pneumatischem Bremskreis zurückhält, eine Einlass-Auslass-Magnetventilkombination, welche ausgangsseitig mit einem Relaisventil verbunden ist. Zusätzlich sind in einem solchen Druckregelmodul 114, 116 ein lokales elektronisches Steuergerät sowie ein Drucksensor zur Messung des vom Relaisventil ausgesteuerten Ist-Bremsdrucks integriert. Der vom Drucksensor gemessene Ist-Bremsdruck wird dann mit einem durch das vom elektrischen Kanal der Betriebsbremsventileinrichtung in das Druckregelmodul 114, 116 eingesteuerte Signal repräsentierten Soll-Bremsdruck im Sinne einer Druckregelung abgeglichen.

Damit ist die Betriebsbremsventileinrichtung 1 vorgesehen, um zum einen den elektrischen Betriebsbremskreis als auch wenigstens einen pneumatischen Betriebsbremskreis (Backup-Bremskreis) eines solchen elektronischen Bremssystems (EBS) zu steuern.

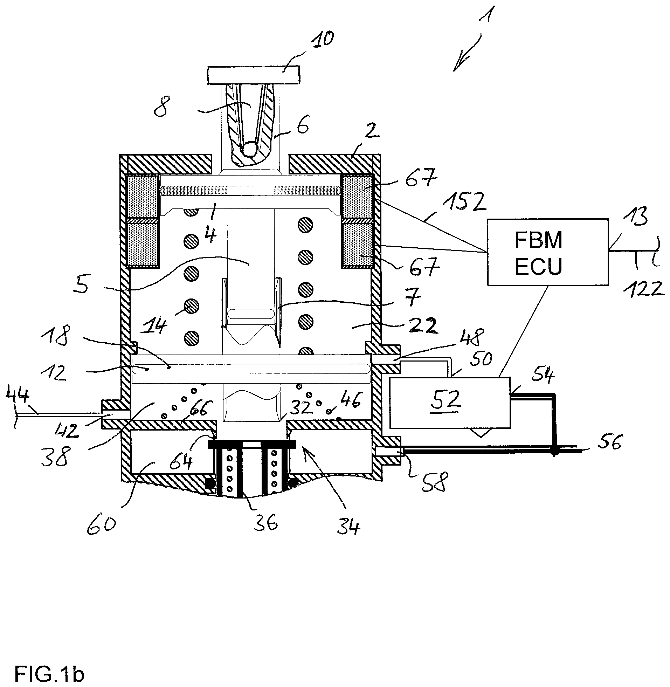

Die Betriebsbremsventileinrichtung 1 hat ein Gehäuse 2, in dem ein Stößelkolben 4 mit einem durch eine Deckelöffnung eines Gehäusedeckels ragenden Stößelaufnahme 6 axial beweglich aufgenommen ist. In die Stößelaufnahme 6 ragt ein Stößel 8 von oben her hinein, welcher mit einem Betriebsbremsbetätigungsorgan 10 in Form einer Fußbremsplatte verbunden ist. Wenn daher der Fahrer die Fußbremsplatte 10 betätigt, drückt der Stößel 8 in die Stößelaufnahme 6 und der Stößelkolben 4 wird durch die Betätigungskraft in Fig.1 nach unten bewegt.

Der Stößelkolben 4 überträgt die Betätigungskraft auf einen im Gehäuse 2 ebenfalls axial beweglich gelagerten Steuerkolben 12 vorzugsweise über eine Stößelkolben-Druckfeder 14. Der Steuerkolben 12 ist bevorzugt ein Doppelkolben mit zwei durch eine Kolbenstange 16 verbundenen Kolben, von denen ein erster Kolben 18 eine erste Steuerkammer 22 und von denen ein zweiter Kolben 20 eine zweite Steuerkammer 24 begrenzt. Die erste Steuerkammer 22 und die zweite Steuerkammer 24 grenzen an voneinander weg weisenden Flächen einer hier quer zur Axialrichtung angeordneten Innenwandung 26 des Gehäuses 2, welche an einer Durchgangsöffnung von der Kolbenstange 16 dichtend durchragt wird. Hierzu ist in der Durchgangsöffnung beispielsweise eine Ringdichtung 28 vorgesehen. Ebenso ist wenigstens einer der beiden Kolben 18, 20 des Steuerkolbens 12 an seiner radial äußeren Umfangsfläche gegenüber einer als Kolbengleitfläche dienenden radial inneren Umfangsfläche des Gehäuses 2 mittels einer geeigneten Gleitdichtung 30 abgedichtet.

Die Kolbenstange 16 des Steuerkolbens 12 weist an ihrem vom Betriebsbremsbetätigungsorgan 10 weg weisenden Ende einen Auslasssitz 32 eines Doppelsitzventils 34 auf, welcher gegen einen im Gehäuse 2 axial beweglich gelagerten, becherförmigen und hohlen Ventilkörper 36 des Doppelsitzventils 34 dichtet oder von diesem abgehoben, einen Strömungsquerschnitt zwischen einer Arbeitskammer 38 und einer kopfseitigen Durchgangsöffnung im Ventilkörper 36 freigibt, welche zu einem Entlüftungsanschluss 40 führt. Diese Situation ist in Fig.1 dargestellt. Die Arbeitskammer 38 steht mit einem Anschluss 42 für einen pneumatischen Betriebsbremskreis in Verbindung, an welchen eine zu einem elektropneumatischen Druckregelmodul 114, 166 einer Achse (Vorderachse, Hinterachse) führende Druckleitung 44 oder 45 angeschlossen ist (Fig.10). In einem solchen Druckregelmodul 114, 116 ist ein Backup-Magnetventil integriert, welches den in der Druckleitung 44, 45 geführten Druck bei intaktem elektrischem Betriebsbremskreis gegenüber an das Druckregelmodul 114, 116 angeschlossene Radbremszylinder 118 bzw. 120 absperrt und bei defektem elektrischem Betriebsbremskreis durchleitet. Hierfür ist es beispielsweise als 2/2-Wegemagnetventil mit stromlos federbelasteter Öffnungsstellung und bestromter Sperrstellung ausgebildet.

Beispielsweise der zweite Kolben 18 des Steuerkolbens 12 ist durch eine vorzugsweise an der Innenwandung 26 abgestützte, in der zweiten Steuerkammer 24 angeordnete Steuerkolben-Druckfeder 46 in die Stellung vorgespannt, in welcher der Auslasssitz 32 von dem Ventilkörper 36 abgehoben ist und dadurch die Radbremszylinder entlüftet werden. Diese Stellung des Steuerkolbens 12 entspricht daher der in Fig.1a gezeigten Stellung "Fahren" der Betriebsbremsventileinrichtung 1.

Die zweite Steuerkammer 24 steht bei dem Ausführungsbeispiel von Fig.1 lediglich unter Atmosphärendruck, wobei eine hier nicht gezeigte Verbindung zu dieser besteht, um bei Bewegungen des Steuerkolbens 12 keine kompressions- oder expansionsbedingten Kräfte auf den Steuerkolben 12 in der zweiten Steuerkammer 24 zu erzeugen.

Andererseits steht die erste Steuerkammer 22 mit einem Anschluss 48 in Verbindung, an welchen ein Ausgangsanschluss 50 einer ersten Magnetventileinrichtung 52 angeschlossen ist, welche an ihrem Eingangsanschluss 54 mit einer an einen Druckluftvorrat angeschlossenen Vorratsdruckleitung 56 in Verbindung steht. Weiterhin ist an der Betriebsbremsventileinrichtung 1 ein Vorratsanschluss 58 vorhanden, an welchen ebenfalls die Vorratsdruckleitung 56 angeschlossen ist und welche mit einer Vorratskammer 60 in Verbindung steht.

Der Ventilkörper 36 ist mittels einer am Boden des Gehäuses 2 und am Inneren des Ventilkörpers 36 abgestützten Ventilkörper-Druckfeder 62 gegen einen Einlasssitz 64 des Doppelsitzventils 34 gedrängt, welcher an einem radial inneren Rand einer zentralen Durchgangsbohrung einer weiteren Innenwandung 66 des Gehäuses 2 ausgebildet ist. Im gegen die Wirkung der Ventilkörper-Druckfeder 62 von dem Einlasssitz 64 abgehobenen Zustand des Ventilkörpers 36 wird ein Strömungsquerschnitt zwischen dem Vorratsanschluss 58 bzw. der Vorratskammer 60 und der Arbeitskammer 38 freigegeben, welcher eine Strömung von unter Vorratsdruck stehender Druckluft in den Anschluss 42 für den Betriebsbremskreis, d.h. in die Bremsdruckleitung ermöglicht, um die Radbremszylinder der betreffenden Achse bzw. des betreffenden Bremskreises zu belüften.

Wie bereits oben erwähnt, ist in Fig.1a die Stellung "Fahren" der Betriebsbremsventileinrichtung 1 gezeigt, in welcher der Auslasssitz 32 vom Ventilkörper 36 abgehoben und der Anschluss 42 für den Betriebsbremskreis und damit auch dessen Radbremszylinder mit dem Entlüftungsanschluss 40 verbunden sind. Dadurch sind die aktiven pneumatischen Radbremszylinder dieses Bremskreises gelöst.

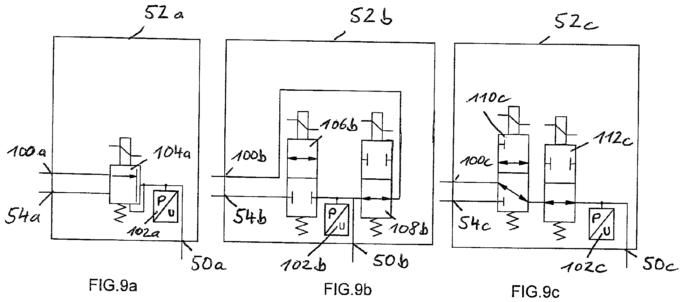

Die erste Magnetventileinrichtung 52, von welcher einige Ausführungsformen in Fig.9a bis Fig.9b gezeigt sind, ermöglicht eine Be- oder Entlüftung der ersten Steuerkammer 22 und wird von einer elektronischen Steuereinrichtung FBM-ECU gesteuert, welche später noch näher beschrieben wird.

In dem Gehäuse 2 sind weiterhin zwei redundante, vorzugsweise axial hintereinander angeordnete und bevorzugt berührungslos wirkende Wegsensoren 67 im axialen Bereich des Stößelkolbens 4 angeordnet, um dessen Betätigungsweg bzw. den Betätigungsgrad zu messen, welcher proportional zum Betätigungsweg bzw. Betätigungsgrad des Betriebsbremsbetätigungsorgans 10 ist. Die Signale dieser Wegsensoren 67 werden beispielsweise in dem elektrischen Kanal der Betriebsbremsventileinrichtung 1 verwendet und in die elektronische Steuereinrichtung FBM-ECU eingesteuert, welches diese Signale aufbereitet und dadurch z.B. datenbusfähig macht und über eine Schnittstelle 13 in eine Datenkommunikationsleitung 122, z.B. einen Datenbus einsteuert, an den das elektronische Betriebsbremssteuergerät EBS-ECU angeschlossen ist.

Die elektronische Steuereinrichtung FBM-ECU, die erste Magnetventileinrichtung 52 und die zugeordnete Verkabelung bzw. pneumatische Verrohrung oder pneumatischen Leitungen bilden zusammen mit den im Gehäuse 2 angeordneten Bauteilen dann die Betriebsbremsventileinrichtung 1 vorzugsweise eine Baueinheit, wobei die elektronische Steuereinrichtung FBM-ECU, die erste Magnetventileinrichtung 52 und die zugeordnete Verkabelung bzw. pneumatische Verrohrung oder pneumatischen Leitungen auch in einem eigenen Gehäuse untergebracht sein können, welches dann beispielsweise an das Gehäuse 2 angeflanscht ist.

Im Unterschied zur Ausführungsform von Fig.1a ist bei der Ausführungsform einer Betriebsbremsventileinrichtung 1 von Fig.1b die erste Steuerkammer zwischen dem Stößelkolben 4 und der zu diesem weisenden Fläche des hier einzigen Kolbens 18 des Steuerkolbens 12 ausgebildet. Eine zweite Steuerkammer 24 ist indes nicht notwendig, so dass auf eine Innenwandung 26 verzichtet werden kann. Dabei mündet der Anschluss 48 am Gehäuse 2 in die erste Steuerkammer 22.

Weiterhin steht der Steuerkolben 12 über eine Stößelkolbenstange 5 mit dem Stößelkolben 4 in mechanischer Wirkverbindung, wobei die Stößelkolbenstange 5 mit dem Stößelkolben 4 verbunden ist und in einem als becherförmige Hülse ausgebildeten Ende 7 des Steuerkolbens 12 axial anschlagen kann, wenn die Stößelkolbenstange 5 den Boden der Hülse 7 erreicht hat, wenn z.B. der Stößelkolben 4 auf den Steuerkolben 12 infolge einer Betätigung des Betriebsbremsbetätigungsorgans zubewegt wird. Andererseits kann die Stößelkolbenstange 5 in der Hülse 7 gleiten, wenn der Stößelkolben 4 vom Steuerkolben 12 wegbewegt wird. Ansonsten ist diese Ausführungsform wie in Fig.1a aufgebaut.

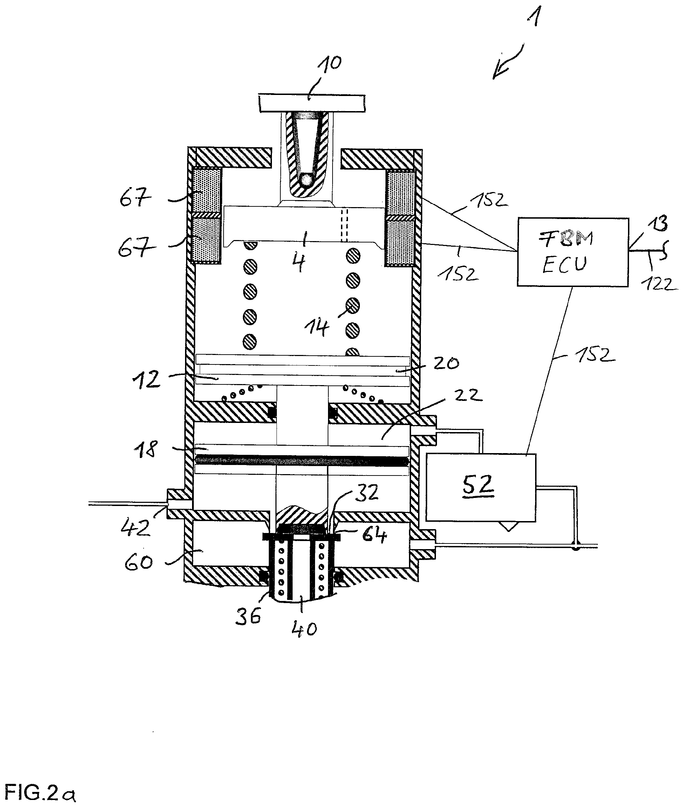

Wenn nun gemäß Fig.2a der Fahrer das Betriebsbremsbetätigungsorgan 10 der Betriebsbremsventileinrichtung 1 nach Fig.1a betätigt, was einer Fahrerbremsanforderung entspricht, so wird der Stößelkolben 4 nach unten verschoben, wobei die Betätigungskraft über die Stößelkolben-Druckfeder 14 auf den Steuerkolben 12 übertragen wird, welcher daraufhin ebenfalls nach unten verschoben wird, bis der Auslasssitz 32 gegen den Ventilkörper 36 dichtet und damit die Verbindung zwischen dem Anschluss 42 für den Betriebsbremskreis und dem Entlüftungsanschluss 40 verschließt, so dass keine weitere Entlüftung der zugeordneten Radbremszylinder mehr erfolgen kann.

Bei weiter gehender Betätigung des Betriebsbremsbetätigungsorgans 10 auf die Fahrerbremsanforderung hin wird dann der Ventilkörper 36 mit an ihm anliegenden Auslasssitz 32 unter Abheben vom Einlasssitz 64 nach unten gedrängt. Dadurch gelangt, wie oben beschrieben, Druckluft unter Vorratsdruck von der Vorratskammer 60 in die Arbeitskammer 38 und von dort in den Anschluss 42 für den Betriebsbremskreis bzw. in die zugeordneten Radbremszylinder, um diese zu belüften und damit zuzuspannen. Bei der Situation von Fig.2a handelt es sich daher um eine reine Fahrerbremsung, bei welcher aufgrund der auf das Betriebsbremsbetätigungsorgan 10 vom Fahrer fahrerbremsanforderungsabhängig ausgeübten Betätigungskraft über die Stößelkolben-Druckfeder 44 eine erste Betätigungskraft auf den Steuerkolben 12 ausgeübt wird, welche diesen letztlich in seine Belüftungsstellung stellt.

Bei einer solchen rein durch eine Fahrerbremsanforderung initiierten Bremsung ist die erste Magnetventileinrichtung 52 mittels der elektronischen Steuereinrichtung FBM-ECU in Entlüftungsstellung gesteuert, in welcher die erste Steuerkammer 22 mit der Atmosphäre in Verbindung steht, zur Vermeidung von Druckeffekten, die infolge der Expansion der ersten Steuerkammer 22 entstehen.

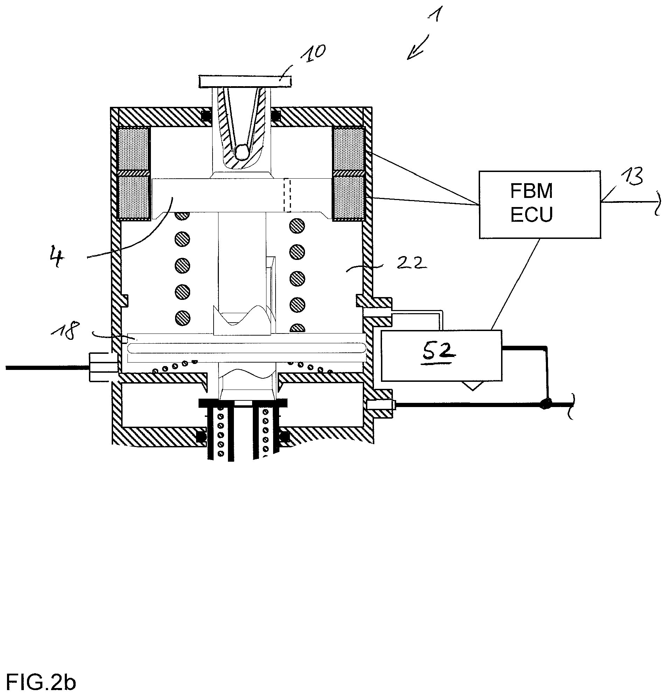

Wenn nun der Fahrer das Betriebsbremsbetätigungsorgan 10 der Betriebsbremsventileinrichtung 1 nach Fig.1b betätigt, was der in Fig.2b gezeigten Situation und wiederum einer Fahrerbremsanforderung entspricht, so wird der Stößelkolben 4 nach unten verschoben, wobei der Stößelkolben 5 gegen den Boden der becherförmigen Hülse 7 gedrängt wird der Steuerkolben 12 ebenfalls nach unten verschoben wird, bis der Auslasssitz 32 gegen den Ventilkörper 36 dichtet und damit die Verbindung zwischen dem Anschluss 42 für den Betriebsbremskreis und dem Entlüftungsanschluss 40 verschließt, so dass keine weitere Entlüftung der zugeordneten Radbremszylinder 118, 120 mehr erfolgen kann.

Bei weiter gehender Betätigung des Betriebsbremsbetätigungsorgans 10 auf die Fahrerbremsanforderung hin wird dann der Ventilkörper 36 mit an ihm anliegenden Auslasssitz 32 unter Abheben vom Einlasssitz 64 nach unten gedrängt. Die weitere Funktionalität ist bereits oben in den Ausführungen zu Fig.2a beschrieben.

Generell ist die erste Steuerkammer 22 in der Betriebsbremsventileinrichtung 1 in Bezug zu dem Steuerkolben 12 derart angeordnet, dass durch Belüften der ersten Steuerkammer 22 eine zweite, in Bezug auf die erste, durch eine reine Fahrerbremsung initiierte Betätigungskraft gleichsinnige Betätigungskraft auf den Steuerkolben 12 erzeugt wird. Eine Entlüftung der ersten Steuerkammer 22 führt dann zu einer Reduzierung der zweiten Betätigungskraft bis minimal zum Wert Null.

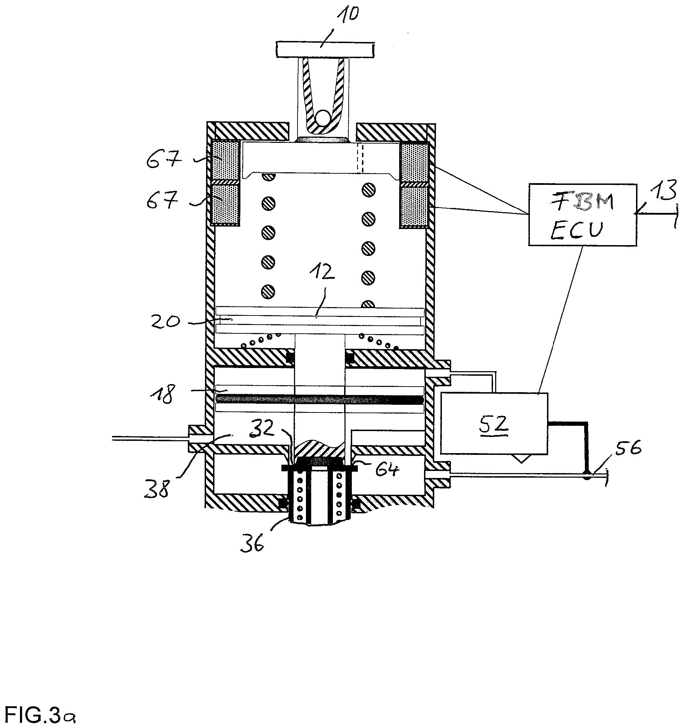

Fig.3a zeigt die Situation, in welcher ohne vorliegende Fahrerbremsanforderung die erste Steuerkammer 22 mit einem pneumatischen Steuerdruck beaufschlagt wird, der von der mittels der elektronischen Steuereinrichtung FBM-ECU in Belüftungsstellung gestellten ersten Magnetventileinrichtung 52 ausgesteuert wird. Die elektronische Steuereinrichtung FBM-ECU steuert die erste Magnetventileinrichtung 52 entsprechend.

In Fig.3a wirkt dann eine aus dem pneumatischen Steuerdruck resultierende zweite Betätigungskraft von oben her auf den ersten Kolben 18 des Steuerkolbens 12, mithin gleichsinnig und parallel in Bezug zu einer gedachten ersten Betätigungskraft, die durch eine Betätigung des Bremsbetätigungsorgans 10 gleichfalls von oben her, d.h. gleichsinnig auf den Steuerkolben 12 wirken würde. Da im Fall von Fig.3a jedoch keine Fahrerbremsanforderung vorliegt, ist diese erste Betätigungskraft lediglich gedacht, um eine Referenz für die Wirkrichtung der zweiten Betätigungskraft vorzugeben. Diese zweite Betätigungskraft drängt dann den Steuerkolben 12 in Fig.3a nach unten, um einerseits den Auslasssitz 32 dichtend gegen den Ventilkörper 36 zu drängen und um andererseits den Ventilkörper 36 vom Einlasssitz 64 abzuheben, damit Druckluft aus der Vorratsdruckleitung 56 in die Arbeitskammer 38 und von dort in den betreffenden pneumatischen Betriebsbremskreis strömen kann, um dort die Radbremsen 118 bzw. 120 zuzuspannen.

Je nach Modulation des in die erste Steuerkammer 22 eingesteuerten pneumatischen Steuerdrucks ist es dann möglich, eine definierte zweite Betätigungskraft am zweiten Steuerkolben 12 einzustellen, was wiederum in einer entsprechenden Bremskraft resultiert, so dass die Einstellung einer beliebigen Bremskraft zwischen dem Wert Null und einer aus dem Vorratsdruck in der Vorratsdruckleitung 56 bzw. 57 resultierenden maximalen Bremskraft möglich ist.

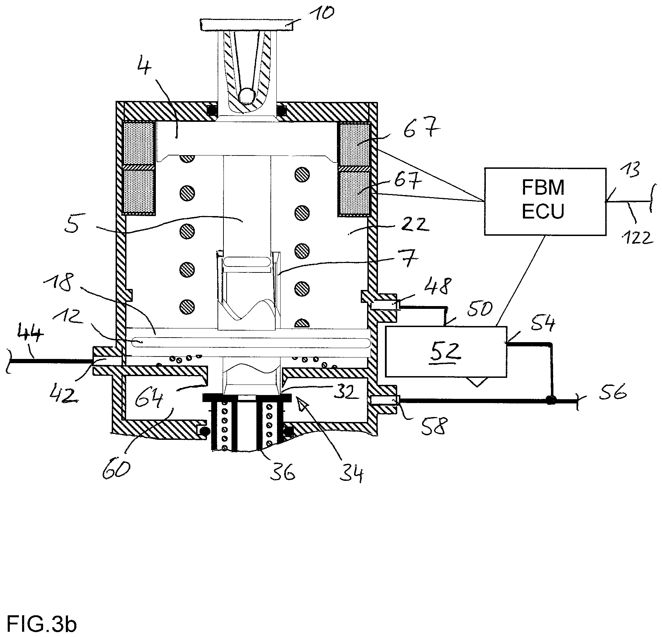

Wenn bei der Ausführungsform von Fig.1b ohne vorliegende Fahrerbremsanforderung nach Fig.3b die erste Steuerkammer 22 mit einem pneumatischen Steuerdruck beaufschlagt wird, wird der ebenfalls der von der mittels der elektronischen Steuereinrichtung FBM-ECU in Belüftungsstellung gestellten ersten Magnetventileinrichtung 52 ausgesteuert. Der dann in der ersten Steuerkammer 22 herrschende Steuerdruck wirkt auf den diesen begrenzenden Stößelkolben 4 und damit auf das Betriebsbremsbetätigungsorgan 10 zurück, was der Fahrer an seinem Fuß spüren kann, wenn er das Betriebsbremsbetätigungsorgan 10 berührt (Pedalrückwirkung). Damit kann der Fahrer eine Einleitung einer automatischen Bremsung am Fuß spüren. Ansonsten ist die Funktionalität wie zu Fig.3a oben beschrieben.

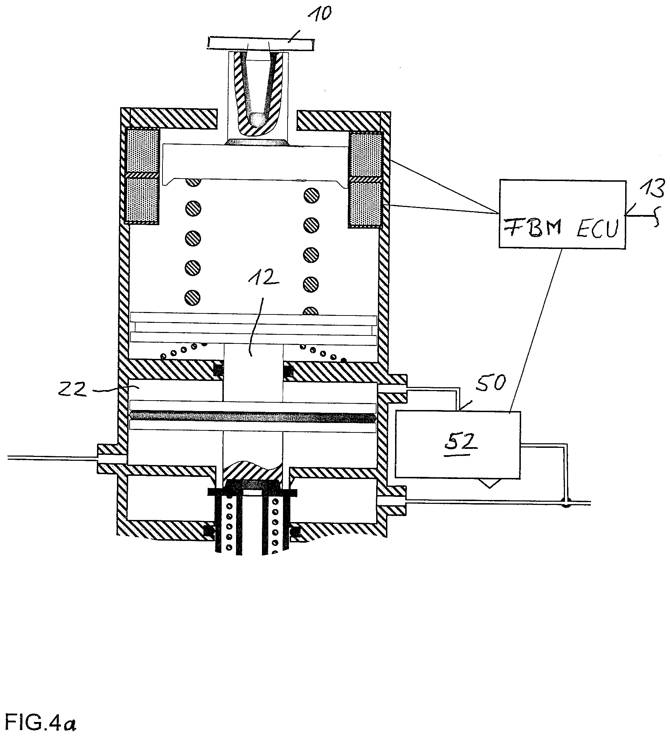

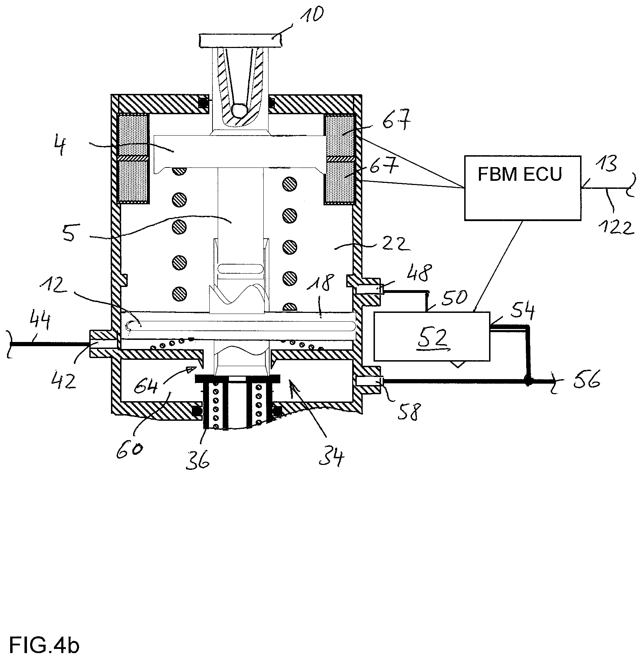

Bei der in Fig.4a gezeigten Situation einer Betriebsbremsventileinrichtung nach Fig.1a wird sowohl auf eine Fahrerbremsanforderung als auch auf eine automatisch generierte Bremsanforderung hin gebremst. Dann wirken auf den Steuerkolben 12 einerseits die erste Betätigungskraft aus der Fahrerbremsanforderung wie auch die zweite Betätigungskraft aus der automatisch generierten Bremsanforderung gleichsinnig und parallel, wodurch sich die beiden Betätigungskräfte am Steuerkolben 12 addieren. Analog gilt dies auch für die in Fig.4b gezeigte Situation einer Betriebsbremsventileinrichtung nach Fig.1b.

Der von der ersten Magnetventileinrichtung 52 ausgesteuerte Steuerdruck für die erste Steuerkammer 22 kann einer Druckregelung unterworfen sein. In diesem Fall wird der Ist-Steuerdruck am Ausgangsanschluss 50 mit einem Drucksensor gemessen und von der elektronischen Steuereinrichtung FBM-ECU gegenüber einem vorgegebenen Soll-Steuerdruck durch eine entsprechende Ansteuerung der ersten Magnetventileinrichtung 52 abgeglichen. Die erste Magnetventileinrichtung 52 bildet dann zusammen mit dem Drucksensor und der elektronischen Steuereinrichtung ECU einen ersten Druckregler für den Steuerdruck in der ersten Steuerkammer 22.

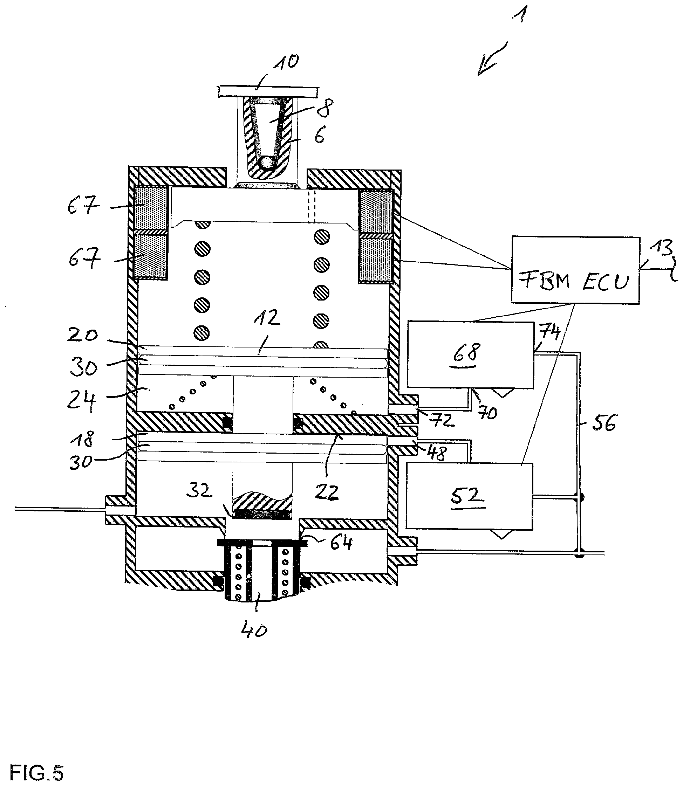

In Fig.5 ist eine weitere Ausführungsform einer Betriebsbremsventileinrichtung 1 gezeigt, bei welcher die zweite Steuerkammer 24 mittels einer eigenen, zweiten Magnetventileinrichtung 68 be- oder entlüftbar ist. Diese zweite Magnetventileinrichtung 68 steht mit ihrem Ausgangsanschluss 70 mit einem Anschluss 72 der Betriebsbremsventileinrichtung 1 in Verbindung, welcher in die zweite Steuerkammer 24 führt. Die zweite Steuerkammer 24 ist in Bezug zu dem Steuerkolben 12 derart angeordnet, dass durch Belüften der zweiten Steuerkammer 12 eine zweite, in Bezug auf die erste Betätigungskraft gegensinnige Betätigungskraft auf den Steuerkolben 12 erzeugt wird.

Mit ihrem Eingangsanschluss 74 ist die zweite Magnetventileinrichtung 68 ebenfalls an die Vorratsdruckleitung 56 angeschlossen und wird wiederum von der elektronischen Steuereinrichtung ECU gesteuert.

Beispiele für Ausführungen einer solchen zweiten Magnetventileinrichtung 68 sind in Fig.9 bis Fig.9c gezeigt, wobei die zweite Magnetventileinrichtung 68 vorzugsweise identisch wie die erste Magnetventileinrichtung 52 aufgebaut ist. Weiterhin bildet die zweite Magnetventileinrichtung 68 evtl. zusammen mit einem zugeordneten Drucksensor ebenfalls einen Bestandteil der Betriebsbremsventileinrichtung 1.

Damit ist mit Hilfe der zweiten Magnetventileinrichtung 68 eine selbständige Be- oder Entlüftung der zweiten Steuerkammer 24 unabhängig von einer Be- oder Entlüftung der ersten Steuerkammer 22 durch die erste Magnetventileinrichtung 52 möglich. Zur Abdichtung der zweiten Steuerkammer trägt der zweite Kolben 20 ebenfalls beispielsweise eine Gleitdichtung 30 an seiner radial äußeren Umfangsfläche.

Damit kann insbesondere eine zweite Betätigungskraft auf den Steuerkolben 12 ausgeübt werden, welche in Bezug zur ersten Betätigungskraft zwar weiterhin parallel, aber gegensinnig wirkt. Dadurch lässt sich die Auswirkung einer Fahrerbremsanforderung im Hinblick auf den durch diese hervorgerufenen Bremsdruck in den Radbremsen begrenzen.

Mit der in Fig.5 gezeigten Ausführungsform können daher die erste Steuerkammer 22 und die zweite Steuerkammer 24 jeweils unabhängig voneinander be- oder entlüftet werden. Davon umfasst ist auch ein Zustand, in welchem beide Steuerkammern 22, 24 gleichzeitig belüftet werden und dadurch gegeneinander wirkende zweite Betätigungskräfte auf den Steuerkolben 12 erzeugt werden, was in der Praxis eher nicht nachgefragt wird. Außerdem sind zwei Magnetventileinrichtungen 52, 68 z.B. nach Fig.9a bis Fig.9c vorhanden, bei denen jeweils eine Regelung des jeweils ausgesteuerten Steuerdrucks stattfindet.

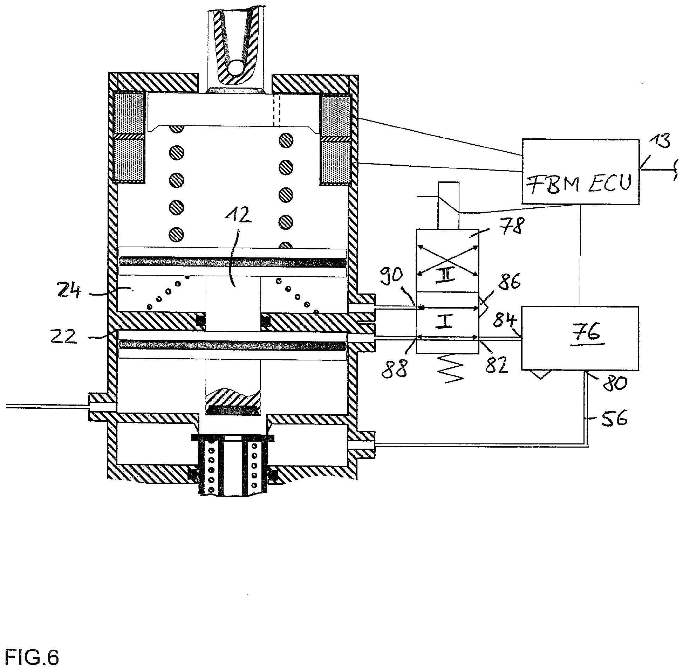

Der Unterschied der Ausführungsform einer Betriebsbremsventileinrichtung 1 von Fig.6 gegenüber Fig.5 liegt darin, dass zur Steuerung der Drücke in der ersten Steuerkammer 22 und in der zweiten Steuerkammer 24 eine einzige Magnetventileinrichtung 76 wie beispielsweise in Fig.9a bis Fig.9c gezeigt und zusätzlich ein 4/2-Wege-Magnetventil 78 verwendet wird. Die Magnetventileinrichtung 76 ist wiederum über ihren Eingangsanschluss 80 an die Vorratsdruckleitung 56 angeschlossen und wird wie auch das 4/2-Wege-Magnetventil 78 von der elektronischen Steuereinrichtung ECU wie bei den vorangehenden Ausführungsbeispielen beschrieben, gesteuert.

Das 4/2-Wege-Magnetventil 78 hat vier Anschlüsse und zwei durch die römischen Buchstaben symbolisierte Schaltstellung I und II, wobei ein erster Anschluss 82 mit dem Ausgangsanschluss 84 der Magnetventileinrichtung 76, ein zweiter Anschluss 86 mit einer Drucksenke (Entlüftung), ein dritter Anschluss 88 mit der ersten Steuerkammer 22 und ein vierter Anschluss 90 mit der zweiten Steuerkammer 24 in Verbindung steht.

In seiner ersten Schaltstellung I, die in Fig.6 gezeigt ist, verbindet das 4/2-Wege-Magnerventil 78 die erste Steuerkammer 22 am dritten Anschluss 88 mit dem Ausgangsanschluss 84 der Magnetventileinrichtung 76 am ersten Anschluss 82, welche dann mit dem von dieser Magnetventileinrichtung 76 ausgesteuerten Steuerdruck beaufschlagt wird, um eine zweite Betätigungskraft für den Steuerkolben 12 zu erzeugen, welche gleichsinnig und parallel in Bezug zu einer ersten Betätigungskraft ist, welche von einer Fahrerbremsanforderung herrührt oder herrühren würde. Insbesondere wird der von der Magnetventileinrichtung 76 ausgesteuerte Steuerdruck geregelt. Weiterhin wird die an den vierten Anschluss 90 angeschlossene zweite Steuerkammer 24 mit der Drucksenke am zweiten Anschluss 86 verbunden, damit die Abwärtsbewegung des Steuerkolbens 12 durch Kompression in der zweiten Steuerkammer 24 nicht behindert wird.

In der zweiten, in Fig.6 nicht gezeigten Schaltstellung des 4/2-Wege-Magnetventils 78 werden der Ausgangsanschluss 84 der Magnetventileinrichtung 76 am ersten Anschluss 82 mit der zweiten Steuerkammer 24 am vierten Anschluss 90 und die Drucksenke am zweiten Anschluss 86 mit der ersten Steuerkammer 22 am dritten Anschluss 88 verbunden. Dadurch wird der von der Magnetventileinrichtung 76 ausgesteuerte Steuerdruck in die zweite Steuerkammer 24 eingesteuert und die erste Steuerkammer 22 entlüftet, was in einer zweiten Betätigungskraft auf den Steuerkolben 12 resultiert, welche in Bezug zu einer ersten, auf einer Fahrerbremsanforderung basierenden Betätigungskraft gegensinnig oder einer solchen entgegen gerichtet ist.

Damit können durch eine Steuerung des Steuerdrucks gemäß Fig.6 ebenfalls wahlweise beide Fälle, nämlich Be- oder Entlüften der ersten Steuerkammer 22 oder Be- oder Entlüften der zweiten Steuerkammer 24 realisiert werden. Ausgeschlossen ist dagegen der in der Praxis nicht nachgefragte Fall einer gleichzeitigen Belüftung beider Steuerkammern 22, 24. Weiterhin ist es ausreichend, nur lediglich einen einzigen, von der Magnetventileinrichtung 76 ausgesteuerten Steuerdruck zu regeln, der dann je nach Schaltstellung des 4/2-Wege-Magnetventils 78 wahlweise in die erste Steuerkammer 22 oder in die zweite Steuerkammer 24 eingesteuert wird. Daher umfasst die Ausführungsform von Fig.6 ebenfalls einen Druckregler mit Magnetventileinrichtung 76, elektronischer Steuereinrichtung ECU zum Ist-Soll-Abgleich sowie mit einem dort nicht gezeigten Drucksensor zur Messung des Ist-Steuerdrucks. Die Soll-Steuerdruckvorgabe erfolgt dabei in allen Fällen abhängig von Fahrbetriebsbedingungen und wird beispielsweise von einem Fahrerassistenzsystem angestoßen.

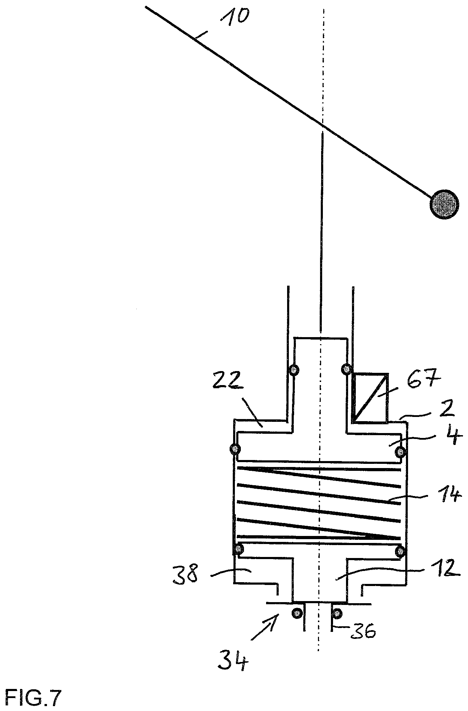

Im Unterschied zu den vorangehend beschriebenen Ausführungsformen grenzt bei der Ausführungsform von Fig.7 die erste Steuerkammer 22 nicht mehr an den Steuerkolben 12, welcher unmittelbar das Doppelsitzventil 34 betätigt. Vielmehr wird die erste Steuerkammer 22 durch das Gehäuse 2 und den Stößelkolben 4 begrenzt, welcher, da er ebenfalls wenn auch indirekt das Doppelsitzventil 34 betätigt oder steuert, ebenfalls einen Steuerkolben der Betriebsbremsventileinrichtung 1 darstellt. Die erste Steuerkammer 22 ist dabei derart angeordnet, dass ihre Belüftung eine zweite Betätigungskraft an dem Stößelkolben 4 hervorruft, welche über die Stößelkolben-Druckfeder 14 auf den Steuerkolben 12 und von dort auf das Doppelsitzventil 34 übertragen wird. Die Funktion der Betriebsbremsventileinrichtung 1 stellt sich dann wie bei den oben beschriebenen Ausführungsformen dar.

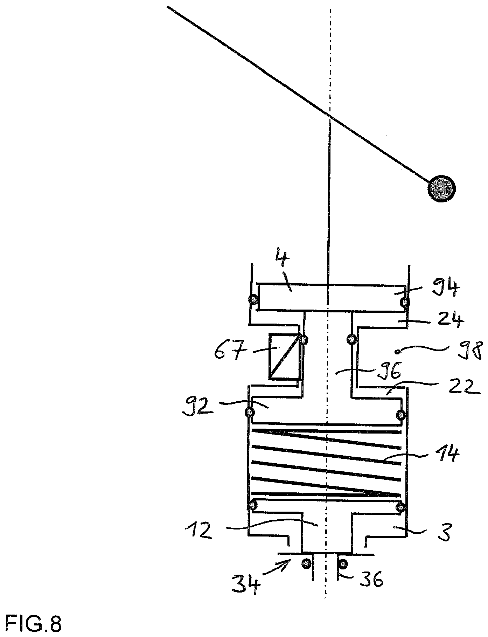

Fig.8 stellt eine Weiterbildung der Ausführungsform von Fig.7 dar, indem diese durch eine zweite Steuerkammer 24 ergänzt wurde, welche ebenfalls zwischen dem Gehäuse 2 und dem Stößelkolben 4 ausgebildet ist. Der Stößelkolben 4 ist dann beispielsweise als Doppelkolben ausgeführt, vergleichbar mit dem Steuerkolben nach Fig.1, wobei eine zwei Kolben 92, 94 verbindende Kolbenstange 96 eine Innenwandung 98 des Gehäuses 2 dichtend durchragt und zwischen einem ersten Kolben 92 und dieser Innenwandung 98 die erste Steuerkammer 22 und einem zweiten Kolben 94 und der Innenwandung 98 die zweite Steuerkammer 24 ausgebildet wird. Auch hier stellt der Stößelkolben 4 wiederum einen Steuerkolben dar, der das Doppelsitzventil 34 (indirekt) betätigt und die Funktion der Betriebsbremsventileinrichtung 1 stellt sich wie bei den oben beschriebenen Ausführungsformen dar.

In Fig.9a bis Fig.9c sind nun Beispiele für Magnetventileinrichtungen 52a, 52b, 52c bzw. Steuerdruckregler 52a, 52b, 52c dargestellt, wie sie in den vorangehenden Ausführungsbeispielen den pneumatischen Steuerdruck für die erste Steuerkammer 22 bzw. die zweite Steuerkammer 24 steuern bzw. regeln. Vereinfachend sind dabei lediglich die in Fig.1 verwendeten Bezugszeichen angetragen.

Diesen Beispielen ist gemeinsam, dass sie von der elektronischen Steuereinrichtung ECU gesteuert werden, einen Eingangsanschluss 54a, 54b, 54c aufweisen, welcher über die Vorratsdruckleitung 56 mit dem Druckluftvorrat verbunden ist, sowie einen Ausgangsanschluss 50a, 50b, 50c, welcher jeweils mit der ersten Steuerkammer 22 oder mit der zweiten Steuerkammer 24 in Verbindung steht oder in Verbindung gebracht wird. Weiterhin weisen alle Ausführungen eine Entlüftung 100a, 100b, 100c auf sowie einen Drucksensor 102a, 102b, 102c zum Messen des Ist-Steuerdrucks am Ausgangsanschluss 50a, 50b, 50c, so dass in Verbindung mit entsprechenden Algorithmen in der elektronischen Steuereinrichtung ECU, welche das am Ausgangsanschluss 50a, 50b, 50c anstehende Ist-Steuerdrucksignal gemeldet wird, eine Druckregelung des ausgesteuerten Steuerdrucks möglich ist bzw. auch durchgeführt wird.

Bei der Ausführung von Fig.9a sorgt ein Proportionalventil 104a für einen entsprechend dem elektrischen Steuersignal (proportional) ausgesteuerten Steuerdruck am Ausgangsanschluss 50a, wobei ebenfalls eine Be- und Entlüftung möglich ist. Bei der Ausführung von Fig.9b ist eine Einlass-/Auslassventilkombination aus zwei 2/2-Wege-Magnetventilen 106b, 108b vorgesehen, wobei das mit dem Eingangsanschluss 54b direkt verbundene Einlassventil 106b unbestromt geschlossen und bestromt geöffnet und das Auslassventil 108b unbestromt geöffnet und bestromt geschlossen ist. Nach Fig.9c wird als Magnetventileinrichtung 52c ein 3/2-Wege-Magnetventil 110c als Be- und Entlüftungsventil mit einer Belüftungsstellung und einer Entlüftungsstellung in Kombination mit einem 2/2-Wege-Magnetventil 112c als Halteventil verwendet, welches in seiner Sperrstellung den Druck am Ausgangsanschluss 50c hält.

Eine solche Magnetventileinrichtung 52a, 52b, 52c kann in jeder der oben beschriebenen Ausführungsformen in Kombination mit dem Drucksensor 102 als Steuerdruckregler verwendet werden, der die elektronische Steuereinrichtung ECU einschließt, um den am Ausgang 50a, 50b, 50c anstehenden Steuerdruck zu regeln.

Fig.10 zeigt schließlich einen schematischen Schaltplan einer bevorzugten Ausführungsform einer elektropneumatischen Betriebsbremseinrichtung 124 eines zur Ankopplung eines Anhängers geeigneten Zugfahrzeugs gemäß der Erfindung mit einer oben beschriebenen Betriebsbremsventileinrichtung 1. Lediglich exemplarisch wird dort die Betriebsbremsventileinrichtung 1 gemäß Fig.1a verwendet, wobei dort beispielsweise ein elektrischer Betriebsbremskreis und zwei pneumatische Betriebsbremskreise vorhanden sind.

Die elektronische Bremssteuereinrichtung EBS-ECU der elektropneumatischen Betriebsbremseinrichtung wird von einer ersten elektrischen Energiequelle 126 mit elektrischer Energie versorgt, die Bestandteil des elektrischen Betriebsbremskreises ist und unabhängig von einer zweiten elektrischen Energiequelle 128 ist, welche beispielsweise lediglich die elektronische Steuereinrichtung FBM-ECU der Betriebsbremsventileinrichtung 1 mit elektrischer Energie versorgt. Bei der Betriebsbremsventileinrichtung 1 ist der elektrische Kanal 130 für den elektrischen Betriebsbremskreis, der pneumatische Vorderachskanal 132 für den pneumatischen Vorderachsbetriebsbremskreis sowie der pneumatische Hinterachskanal 134 für den pneumatischen Hinterachsbetriebsbremskreis erkennbar. Erkennbar sind auch die Druckleitungen 44, 45, welche den im Vorderachskanal 132 bzw. im Hinterachskanal 134 herrschenden Druck dem zugeordneten Druckregelmodul 114 bzw. 116 zuführen, wo dieser Druck durch das integrierte Backup-Magnetventil zunächst gegenüber den Radbremszylindern 118, 120 abgesperrt wird. Das der Hinterachse zugeordnete Druckregelmodul 116 ist beispielsweise ein 2-Kanal-Druckregelmodul, an der Vorderachse ist demgegenüber ein 1-Kanal-Druckregelmodul 114 verbaut, welches über Bremsdruckleitungen, in die ABS-Drucksteuerventile 138 integriert sind, mit den Radbremszylindern 118 an der Vorderachse in Verbindung steht. Die ABS-Drucksteuerventile werden im Falle von unzulässigem Bremsschlupf von der elektronischen Bremssteuereinrichtung EBS-ECU in bekannter Weise angesteuert, um den Bremsschlupf an den Rädern der Vorderachse an einen zulässigen Bremsschlupf anzupassen. Die Bremsschlupfregelung an den Rädern der Hinterachse erfolgt mittels des dortigen 2-Kanal-Druckregelmoduls 116, welches über Bremsdruckleitungen 137 mit den zugeordneten Radbremszylindern verbunden ist.

Vorzugsweise sind für die beiden Betriebsbremskreise (Vorderachse, Hinterachse) jeweils ein eigener Druckluftvorrat 140, 142 vorgesehen, welche jeweils über eine Vorratsdruckleitung 56, 57 einerseits an den jeweiligen pneumatischen Kanal 132, 134 des Betriebsbremsventils und andererseits an die Druckregelmodule 114, 116 angeschlossen sind. Die Druckregelmodule 114, 116 beinhalten eine Einlass/Auslassventilkombination sowie ein von dieser pneumatisch angesteuertes Relaisventil, wobei jeweils abhängig von einer Ansteuerung durch die elektronische Bremssteuereinrichtung EBS-ECU aus dem Vorratsdruck jeweils ein Bremsdruck moduliert und in die Bremsdruckleitungen 136, eingesteuert wird. Weiterhin ist in den Druckregelmodulen 114, 116 für jeden Kanal bzw. in dem Anhängersteuermodul TCM jeweils ein Drucksensor integriert, der den jeweils herrschenden Ist-Bremsdruck in den Bremsdruckleitungen 136, 137 bzw. am Kupplungskopf "Bremse" misst und in lokale elektronische Steuereinrichtungen rückkoppelt, die jeweils in den Druckregelmodulen 114, 116 bzw. in dem Anhängersteuermodul TCM integriert sind, um eine Bremsdruckregelung durch Vergleich mit einem Soll-Bremsdruck in bekannter Weise durchführen zu können.

Über beispielsweise die dem pneumatischen Vorderachsbremskreis zugeordnete Druckleitung 44 wird ein hinlänglich bekanntes Anhängersteuermodul TCM redundant druckluftgesteuert, welches priorisiert ebenfalls von der elektronischen Bremssteuereinrichtung EBS-ECU elektrisch gesteuert wird. Das Anhängersteuermodul TCM wird außerdem von einem der Druckluftvorräte 140 oder 142 mittels der Druckluftvorratsleitung 56 oder 57 druckluftversorgt, was aber in Fig.10 nicht gezeigt ist. Ausgangsseitig steht das Anhängersteuermodul TCM mit einem Kupplungskopf "Bremse" 148 und einem Kupplungskopf "Vorrat" 150 in Verbindung, um die Anhängerbremsen in bekannter Weise zu steuern.

Es versteht sich, dass die Druckregelmodule 114, 116, das Anhängersteuermodul TCM sowie die ABS-Drucksteuerventile jeweils mittels einer elektrischen Steuerleitung 152 mit der elektronischen Bremssteuereinrichtung EBS-ECU verbunden sind.

Zu erkennen sind außerdem die vorzugsweise in die z.B. nach Fig.1a ausgebildete Betriebsbremsventileinrichtung 1 z.B. integrierte elektronische Steuereinrichtung FBM-ECU sowie die erste Magnetventileinrichtung 52b, die beispielsweise nach Fig.9b eine Einlass-/Auslassventilkombination 106b, 108b sowie einen Drucksensor 102b enthält. Bei dem gezeigten Ausführungsbeispiel sind diese Komponenten beispielsweise in einem eigenen Gehäuse untergebracht, welches an das Gehäuse der Betriebsbremsventileinrichtung 1 angeflanscht ist. Weiterhin sind auch die redundant vorhandenen Bremswertgeber 67 sichtbar. Die elektronische Steuereinrichtung FBM-ECU beinhaltet beispielsweise zwei redundante, sich gegenseitig überwachende Mikroprozessoren 154a, 154b. In gleicher Weise verfügt auch die elektronische Bremssteuereinrichtung EBS-ECU über zwei redundante Mikroprozessoren 156a, 156b. Raddrehzahlsensoren an den Rädern melden außerdem die jeweilige Raddrehzahl an die lokalen Steuergeräte in den Druckregelmoduln 114, 116, die sie dann an das elektronische Bremssteuergerät EBS-ECU weiterschleifen.

Vor diesem Hintergrund ist die Funktionsweise der Betriebsbremseinrichtung 124 wie folgt:
Bei intaktem vorrangigem elektrischem Betriebsbremskreis wird bei einer Fahrerbremsanforderung durch Betätigung des Betriebsbremsbetätigungsorgans 10 ein elektrisches Bremsanforderungssignal mittels der Bremswertgeber 67 erzeugt und in die elektronische Steuereinrichtung FBM-ECU der Betriebsbremsventileinrichtung 1 eingesteuert, wo diese Signale aufbereitet und über den Datenbus 122 in die elektronische Bremssteuereinrichtung EBS-ECU eingeleitet werden. Dort werden die Signale durch höhere Funktionen wie z.B. lastabhängige Bremskraftregelung (ALB), Differenzschlupfregelung etc. korrigiert und dann von dort jeweils ein einen Soll-Bremsdruck repräsentierendes Signal an die Druckregelmodule 114, 166 bzw. TCM eingesteuert, wo durch eine entsprechende Betätigung der jeweils dort vorhandenen Einlass-/Auslassventilkombinationen aus dem Vorratsdruck ein entsprechender Bremsdruck moduliert und in die Radbremszylinder 118, 120 geleitet wird, um diese entsprechend zuzuspannen. Mittels der in den Moduln 114, 116, TCM integrierten Drucksensoren wird der Ist-Bremsdruck gemessen und durch Vergleich mit dem Soll-Bremsdruck, der als diesen repräsentierendes Signal in den lokalen Steuergeräten vorliegt, im Sinne einer Bremsdruckregelung angepasst. Die genannten Vorgänge laufen daher in dem vorrangigen elektrischen Betriebsbremskreis ab.

Parallel hierzu wird durch die Betätigung des Betriebsbremsbetätigungsorgans 10 in den beiden pneumatischen Kanälen 132, 134 und dann auch in den dort angeschlossenen Druckleitungen 44, 45 in oben bereits beschriebener Weise ein Bremsdruck erzeugt, welcher aber noch durch die bestromt in Sperrstellung geschalteten Backup-Magnetventile in den Moduln 114, 116, TCM zurückgehalten werden.

Wenn nun ein Fehler oder Defekt in dem vorrangigen elektrischen Betriebsbremskreis auftritt, sei es dass die erste Energiequelle 126, die elektronische Bremssteuereinrichtung EBS-ECU oder eines der lokalen Steuergeräte in den Moduln 114, 116, TCM ausfällt, so schalten die in diesen Moduln integrierten Backup-Magnetventile nun unbestromt in ihre Durchlassstellung, wodurch die in den Druckleitungen 44, 45 anstehenden Bremsdrücke durch die Moduln 114, 116, TCM hindurch an die Radbremszylinder 118, 120 bzw. an den Kupplungskopf "Bremse" geleitet werden, um im Zugfahrzeug bzw. im Anhänger die Radbremsen zuzuspannen. Damit können die Bremsen bei einem Defekt im elektrischen Betriebsbremskreis bisher allerdings nur durch den Fahrer und dann nur rein pneumatisch betätigt werden.

Darüber hinaus ist die elektronische Steuereinrichtung FBM-ECU der elektropneumatischen Betriebsbremsventileinrichtung 1 ausgebildet, dass wenn ein Fehler oder ein Ausfall des vorrangigen elektrischen Betriebsbremskreises der elektropneumatischen Betriebsbremseinrichtung festgestellt worden ist und wenn eine Bremsanforderung vorliegt, sie die erste Magnetventileinrichtung 52b ansteuert, um wie oben beschrieben, eine zweite Betätigungskraft am Steuerkolben 12 zu erzeugen, welche auch ohne Fahrerbremsanforderung in der Lage ist, den Ventilkörper 36 vom Einlasssitz 64 abzuheben, um die zu den Moduln 114, 116, TCM führenden Druckleitungen 44, 45 mit einem entsprechend der zweiten Betätigungskraft gebildeten Bremsdruck zu belüften. Da die dortigen Backup-Magnetventile unbestromt in ihre Durchlassstellungen geschaltet sind, gelangt dieser Bremsdruck dann in die Radbremszylinder 118, 120 bzw. in den Kupplungskopf "Bremse" 148.

Ein Ausfall oder ein Fehler des elektrischen Betriebsbremskreises wird insbesondere im Rahmen einer Selbstüberwachung durch die elektronische Bremssteuereinrichtung EBS-ECU der elektropneumatischen Betriebsbremseinrichtung 124 selbst oder im Rahmen einer Fremdüberwachung durch die elektronische Steuereinrichtung FBM-ECU der elektropneumatischen Betriebsbremsventileinrichtung 1 festgestellt. Denkbar ist aber auch eine Fremdüberwachung durch eine elektronische Steuereinrichtung eines beliebigen dritten Systems. Die Kommunikation erfolgt dabei bevorzugt über den Datenbus 122. Da die elektronische Steuereinrichtung FBM-ECU der Betriebsbremsventileinrichtung 1 von der von der ersten Energiequelle 126 unabhängigen zweiten Energiequelle 128 stromversorgt wird, wird diese Funktionalität auch nicht durch einen Ausfall der ersten Energiequelle 126 verhindert.

Die zweite elektrische Energiequelle kann beispielsweise durch eine separate Batterie, (Doppelschicht-) Kondensatoren, einen weiteren Energiespeicher oder auch ein eigenes Stromerzeugungsgerät (z.B. druckluftbetriebener Generator) dargestellt werden. Die zweite Energiequelle wird bevorzugt auf Ladekapazität und Funktionsfähigkeit überwacht (SOC, SOH, regelmäßiges Laden/Entladen). Die kann beispielsweise mittels der elektronischen Bremssteuereinrichtung EBS-ECU der elektropneumatischen Betriebsbremseinrichtung 124, die elektronische Steuereinrichtung FBM-ECU der Betriebsbremsventileinrichtung 1 oder mittels eines sonstigen Systems wie z.B. die Batterieüberwachung einer Hybridantriebssteuerung des Fahrzeugs erfolgen.

Die Bremsanforderung kann dabei von einem beliebigen System des Fahrzeugs stammen, beispielsweise auch von einer Fahrzeugfolgeregelung (ACC, Adaptive Cruise Control), durch welche der Abstand bzw. die Relativgeschwindigkeit zu einem vorausfahrenden Fahrzeug konstant gehalten wird. Dann kann die Funktionalität eines solchen ACC-Systems auch dann aufrechterhalten werden, wenn der elektrische Betriebsbremskreis der Betriebsbremsvorrichtung 124 ausgefallen ist.

Die automatisch generierte Bremsanforderung bzw. das automatisch generierte Bremsanforderungssignal wird dann als elektrisches Signal über die Schnittstelle 13 in die Steuereinrichtung FBM-ECU der Betriebsbremsventileinrichtung 1 eingesteuert, um die zweite Betätigungskraft am Steuerkolben 12 zu erzeugen. Da diese Schnittstelle 13 bevorzugt an einen Datenbus bzw. an eine Kommunikationsleitung 122 angeschlossen ist, über welche nicht nur die Kommunikation mit der elektronischen Steuereinrichtung EBS-ECU der Betriebsbremseinrichtung 124 sondern auch mit elektronischen Steuereinrichtungen einer Anzahl von weiteren elektronischen Fahrzeugsystemen erfolgt, welche insbesondere wenigstens ein Fahrerassistenzsystem wie ACC beinhalten, kann das Bremsanforderungssignal von einem beliebigen Fahrerassistenzsystem des Zugfahrzeugs automatisch generiert werden.

Bei den Ausführungsformen von Fig.5, Fig.6 und Fig.8, bei welchen zusätzlich zur ersten Steuerkammer 22 und zur ersten Magnetventileinrichtung 52 eine zweite be- und entlüftbare Steuerkammer 24 sowie eine zweite Magnetventileinrichtung 68 bzw. ein 4/2-Wege-Magnetventil vorhanden sind, sind diese Komponenten vorzugsweise ebenfalls in dem Gehäuse aufgenommen, in welchem die erste Magnetventileinrichtung 52 bzw. 76 untergebracht und welches an das Gehäuse der Betriebsbremsventileinrichtung 1 angeflanscht ist.

Mit der dann in der zweiten Steuerkammer 24 gegensinnig zur ersten Betätigungskraft wirkenden zweiten Betätigungskraft kann eine Fahrerbremsanforderung abgeschwächt bzw. wenigstens teilweise übersteuert werden, was in Einzelfällen notwendig sein kann.

### Bezugszahlenliste

- 1: Betriebsbremsventileinrichtung
- 2: Gehäuse
- 4: Stößelkolben
- 5: Stößelkolbenstange
- 6: Stößelaufnahme
- 7: Hülse
- 8: Stößel
- 10: Betriebsbremsbetätigungsorgan
- 12: Steuerkolben
- 13: elektrischer Anschluss
- 14: Stößelkolben - Druckfeder
- 16: Kolbenstange
- 18: erster Kolben
- 20: zweiter Kolben
- 22: erste Steuerkammer
- 24: zweite Steuerkammer
- 26: Innenwandung
- 28: Ringdichtung
- 30: Gleitdichtungen
- 32: Auslasssitz
- 34: Doppelsitzventil
- 36: Ventilkörper
- 38: Arbeitskammer
- 40: Entlüftungsanschluss
- 42: Anschluss Betriebsbremskreis
- 44: Bremsdruckleitung
- 45: Bremsdruckleitung
- 46: Steuerkolben - Druckfeder
- 48: Anschluss
- 50: Ausgangsanschluss
- 52: erste Magnetventileinrichtung
- 54: Eingangsanschluss
- 56: Vorratsdruckleitung
- 57: Vorratsdruckleitung
- 58: Vorratsanschluss
- 60: Vorratskammer
- 62: Ventilkörper - Druckfeder
- 64: Einlasssitz
- 66: Innenwandung
- 67: Wegsensor
- 68: zweite Magnetventileinrichtung
- 70: Ausgangsanschluss
- 72: Anschluss
- 74: Eingangsanschluss
- 76: Magnetventileinrichtung
- 78: 4/2-Wege-Magnetventil
- 80: Eingangsanschluss
- 82: erster Anschluss
- 84: Ausgangsanschluss
- 86: zweiter Anschluss
- 88: dritter Anschluss
- 90: vierter Anschluss
- 92: erster Kolben
- 94: zweiter Kolben
- 96: Kolbenstange
- 98: Innenwandung
- 100: Entlüftung
- 102: Drucksensor
- 104: Proportionalventil
- 106: 2/2-Wege-Magnetventil
- 108: 2/2-Wege-Magnetventil
- 110: 3/2-Wege-Magnetventil
- 112: 2/2-Wege-Magnetventil
- 114: Druckregelmodul
- 116: Druckregelmodul
- 118: Radbremszylinder
- 120: Radbremszylinder
- 122: Datenbus
- 124: Betriebsbremseinrichtung
- 126: erste Energiequelle
- 128: zweite Energiequelle
- 130: elektrischer Kanal
- 132: pneumatischer Vorderachskanal
- 134: pneumatischer Hinterachskanal
- 136: Bremsdruckleitung
- 137: Bremsdruckleitung
- 138: ABS-Drucksteuerventil
- 140: Druckluftvorrat
- 142: Druckluftvorrat
- 148: Kupplungskopf "Bremse"
- 150: Kupplungskopf "Vorrat
- 152: elektrische Steuerleitungen
- 154a/b: Mikroprozessoren

## Patentansprüche

1. Verfahren zum Steuern einer durch eine elektropneumatische Betriebsbremsventileinrichtung (1) betätigten elektropneumatischen Betriebsbremseinrichtung (124), insbesondere eines elektronischen Bremssystems (EBS) eines Fahrzeugs, wobei die elektropneumatische Betriebsbremsventileinrichtung (1) ein Betriebsbremsbetätigungsorgan (10) sowie
a) innerhalb wenigstens eines elektrischen Betriebsbremskreises der elektropneumatischen Betriebsbremseinrichtung (124) wenigstens einen elektrischen Kanal (130) mit wenigstens einem vom Betriebsbremsbetätigungsorgan (10) durch aufgrund einer Fahrerbremsanforderung betätigbaren elektrischen Bremswertgeber (67) zum betätigungsabhängigen Aussteuern von Betätigungssignalen und mit wenigstens einer die Betätigungssignale empfangenden elektronischen Steuereinrichtung (FBM-ECU) aufweist, welche abhängig von den Betätigungssignalen Bremsanforderungssignale in die elektronische Bremssteuereinrichtung (EBS-ECU) des wenigstens einen elektrischen Betriebsbremskreises einsteuert, welche elektropneumatische Modulatoren (114, 116) des wenigstens einen elektrischen Betriebsbremskreises ansteuert, um einen pneumatischen Bremsdruck oder Bremssteuerdruck für pneumatische Radbremsaktuatoren (118, 120) zu erzeugen, sowie
b) innerhalb wenigstens eines pneumatischen Betriebsbremskreises der elektropneumatischen Betriebsbremseinrichtung (124) wenigstens einen pneumatischen Kanal (132, 134), bei welchem durch Betätigung des Betriebsbremsbetätigungsorgans (10) aufgrund einer Fahrerbremsanforderung wenigstens ein Steuerkolben (4, 12) der Betriebsbremsventileinrichtung (1) mit einer ersten Betätigungskraft belastet wird und der Steuerkolben (4; 12) wenigstens ein einen Einlasssitz (64) und einen Auslasssitz (32) beinhaltendes Doppelsitzventil (34) der Betriebsbremsventileinrichtung (1) direkt oder indirekt steuert, um einen pneumatischen Bremsdruck oder Bremssteuerdruck für die pneumatischen Radbremsaktuatoren (118, 120) zu erzeugen, **dadurch gekennzeichnet, dass**
c) der wenigstens eine Steuerkolben (4; 12) der Betriebsbremsventileinrichtung (1) bei Vorliegen einer vom Fahrerwunsch unabhängigen Bremsanforderung außer durch die erste Betätigungskraft zusätzlich durch eine zweite Betätigungskraft oder anstatt der ersten Betätigungskraft durch eine zweite Betätigungskraft belastet wird, welche in Bezug zur ersten Betätigungskraft parallel und gleichsinnig oder gegensinnig auf den wenigstens einen Steuerkolben (4;12) wirkt und unabhängig von einer Fahrerbremsanforderung auf der Basis von durch die elektronische Steuereinrichtung (FBM-ECU) der Betriebsbremsventileinrichtung (1) ausgesteuerten elektrischen Signalen erzeugt wird.

2. Verfahren nach Anspruch 1, **dadurch gekennzeichnet, dass** die zweite Betätigungskraft auf der Basis von durch die elektronische Steuereinrichtung (FBM-ECU) der Betriebsbremsventileinrichtung (1) ausgesteuerten elektrischen Signalen elektropneumatisch, elektrohydraulisch und/oder elektromechanisch erzeugt wird.

3. Verfahren nach einem der vorhergehenden Ansprüche, **dadurch gekennzeichnet, dass** die auf den wenigstens einen Steuerkolben (4; 12) wirkende zweite Betätigungskraft, ein von der zweiten Betätigungskraft herrührender Betätigungsweg des wenigstens einen Steuerkolbens (4; 12) und/oder eine die zweite Betätigungskraft erzeugende Größe als Ist-Größe gemessen und mit einer Soll-Größe im Sinne einer Regelung abgeglichen wird.

4. Verfahren nach einem der vorhergehenden Ansprüche, **dadurch gekennzeichnet, dass** die zweite Betätigungskraft mittels einer von der elektronischen Steuereinrichtung (ECU) der Betriebsbremsventileinrichtung (1) gesteuerten elektro-pneumatischen Magnetventileinrichtung (52, 68; 76, 78) pneumatisch erzeugt wird, indem ein von der wenigstens einen elektropneumatischen Magnetventileinrichtung (52, 68; 76, 78) auf ein Signal der elektronischen Steuereinrichtung (FBM-ECU) der Betriebsbremsventileinrichtung (1) hin ausgesteuerter Steuerdruck auf den wenigstens einen Steuerkolben (4, 12) direkt oder indirekt wirkt.

5. Verfahren nach Anspruch 4, **dadurch gekennzeichnet, dass** der Steuerdruck geregelt wird.

6. Verfahren nach einem der vorhergehenden Ansprüche, **dadurch gekennzeichnet, dass** die zweite Betätigungskraft bei Vorliegen einer Bremsanforderung erzeugt wird, wenn ein Fehler oder ein Ausfall des elektrischen Betriebsbremskreises und/oder insbesondere der elektronischen Bremssteuereinrichtung (EBS-ECU) der elektropneumatischen Betriebsbremseinrichtung (124) festgestellt worden ist.

7. Verfahren nach Anspruch 6, **dadurch gekennzeichnet, dass** ein Ausfall oder ein Fehler des elektrischen Betriebsbremskreises und/oder der elektronischen Bremssteuereinrichtung (EBS-ECU) der elektropneumatischen Betriebsbremseinrichtung (124) im Rahmen einer Selbstüberwachung durch die elektronische Bremssteuereinrichtung (EBS-ECU) der elektropneumatischen Betriebsbremseinrichtung (124) selbst oder im Rahmen einer Fremdüberwachung durch die elektronische Steuereinrichtung (FBM-ECU) der elektropneumatischen Betriebsbremsventileinrichtung (1) festgestellt wird.

8. Verfahren nach Anspruch 6 oder 7, **dadurch gekennzeichnet, dass** bei festgestelltem Ausfall oder Fehler des elektrischen Betriebsbremskreises und/oder der elektronischen Bremssteuereinrichtung (EBS-ECU) der elektropneumatischen Betriebsbremseinrichtung (124) mit Hilfe des wenigstens einen pneumatischen Kanals (132, 134) der Betriebsbremsventileinrichtung (1) in dem wenigstens einen pneumatischen Betriebsbremskreis auf der Basis der zweiten Betätigungskraft ein Bremsdruck oder ein Bremssteuerdruck erzeugt und in die pneumatischen Radbremsaktuatoren (118, 120) eingesteuert wird.

9. Verfahren nach einem der Ansprüche 6 bis 8, **dadurch gekennzeichnet, dass** die elektronische Bremssteuereinrichtung (EBS-ECU) der elektropneumatischen Betriebsbremseinrichtung (124) von einer ersten elektrischen Energiequelle (126) mit elektrischer Energie versorgt wird, welche unabhängig von einer zweiten elektrischen Energiequelle (128) ist, welche die elektronische Steuereinrichtung (FBM-ECU) der Betriebsbremsventileinrichtung (1) mit elektrischer Energie versorgt.

10. Elektropneumatische Betriebsbremseinrichtung (124), insbesondere elektronisches Bremssystem (EBS) eines Fahrzeugs, welches eine elektropneumatische Betriebsbremsventileinrichtung (1) sowie wenigstens eine elektronische Bremssteuereinrichtung (EBS-ECU) zum Steuern von elektropneumatischen Radbremsaktuatoren (118, 120) aufweist, wobei die elektropneumatische Betriebsbremsventileinrichtung (1) ein Betriebsbremsbetätigungsorgan (10) sowie
a) innerhalb wenigstens eines elektrischen Betriebsbremskreises der elektropneumatischen Betriebsbremseinrichtung wenigstens einen elektrischen Kanal (130) mit wenigstens einem vom Betriebsbremsbetätigungsorgan (10) durch aufgrund einer Fahrerbremsanforderung betätigbaren elektrischen Bremswertgeber (67) zum betätigungsabhängigen Aussteuern von Betätigungssignalen und mit wenigstens einer die Betätigungssignale empfangenden elektronischen Steuereinrichtung (FBM-ECU) aufweist, welche abhängig von den Betätigungssignalen Bremsanforderungssignale in die elektronische Bremssteuereinrichtung (EBS-ECU) des wenigstens einen elektrischen Betriebsbremskreises einsteuert, welche elektropneumatische Modulatoren (114, 116) des wenigstens einen elektrischen Betriebsbremskreises ansteuert, um einen pneumatischen Bremsdruck oder Bremssteuerdruck für pneumatische Radbremsaktuatoren (118, 120) zu erzeugen, sowie
b) innerhalb wenigstens eines pneumatischen Betriebsbremskreises der elektropneumatischen Betriebsbremseinrichtung wenigstens einen pneumatischen Kanal (132, 134), bei welchem durch Betätigung des Betriebsbremsbetätigungsorgans (10) aufgrund einer Fahrerbremsanforderung wenigstens ein Steuerkolben (4, 12) der Betriebsbremsventileinrichtung (1) mit einer ersten Betätigungskraft belastet wird und der Steuerkolben (4; 12) wenigstens ein einen Einlasssitz (64) und einen Auslasssitz (32) beinhaltendes Doppelsitzventil (34) der Betriebsbremsventileinrichtung (1) direkt oder indirekt steuert, um einen pneumatischen Bremsdruck oder Bremssteuerdruck für die pneumatischen Radbremsaktuatoren (118, 120) zu erzeugen,
**dadurch gekennzeichnet, dass**
c) die elektronische Steuereinrichtung (FBM-ECU) der elektropneumatischen Betriebsbremsventileinrichtung (1) beinhaltende Mittel (ECU, 52, 68; 76, 78, 102) zum Erzeugen einer zweiten Betätigungskraft unabhängig von einer Fahrerbremsanforderung vorgesehen sind, welche bei Vorliegen einer vom Fahrerwunsch unabhängigen Bremsanforderung in Bezug zur ersten Betätigungskraft parallel und gleichsinnig oder gegensinnig auf den wenigstens einen Steuerkolben (4; 12) wirkt.

11. Elektropneumatische Betriebsbremseinrichtung nach Anspruch 10, **dadurch gekennzeichnet, dass** die elektronische Steuereinrichtung (FBM-ECU) der Betriebsbremsventileinrichtung (1) eine Schnittstelle (13) aufweist, durch welche Signale einsteuerbar sind, auf deren Basis die elektronische Steuereinrichtung (FBM-ECU) der Betriebsbremsventileinrichtung (1) elektrische Signale zum Erzeugen der zweiten Betätigungskraft bildet.

12. Elektropneumatische Betriebsbremseinrichtung nach Anspruch 11, **dadurch gekennzeichnet, dass** die Bremssteuereinrichtung (EBS-ECU) der elektropneumatischen Betriebsbremseinrichtung (124) über einen elektrischen Kommunikationspfad (122), insbesondere über einen Datenbus an die Schnittstelle (13) der elektronischen Steuereinrichtung (FBM-ECU) der Betriebsbremsventileinrichtung (1) angeschlossen ist.

13. Elektropneumatische Betriebsbremseinrichtung nach Anspruch 12, **dadurch gekennzeichnet, dass** die elektronische Steuereinrichtung (FBM-ECU) der Betriebsbremsventileinrichtung (1) einerseits ausgebildet ist, dass sie über die Schnittstelle (13) durch Betätigung des Bremsbetätigungsorgans (10) erzeugte Bremsanforderungssignale in die elektronische Bremssteuereinrichtung (EBS-ECU) einsteuert und andererseits bei Vorliegen der vom Fahrerwunsch unabhängigen Bremsanforderung die elektrischen Signale zum Erzeugen der zweiten Betätigungskraft generiert, wenn über die Schnittstelle (13) Signale eingesteuert werden, welche einen Fehler oder einen Ausfall des elektrischen Bremskreises und insbesondere einen Fehler oder einen Ausfall der Bremssteuereinrichtung (EBS-ECU) der elektropneumatischen Betriebsbremseinrichtung (124) repräsentieren.

14. Elektropneumatische Betriebsbremseinrichtung nach Anspruch 13, **dadurch gekennzeichnet, dass** die elektronische Bremssteuereinrichtung (EBS-ECU) der elektropneumatischen Betriebsbremseinrichtung (124) von einer ersten elektrischen Energiequelle (126) mit elektrischer Energie versorgt ist, welche unabhängig von einer zweiten elektrischen Energiequelle (128) ist, welche die elektronische Steuereinrichtung (FBM-ECU) der Betriebsbremsventileinrichtung (1) mit elektrischer Energie versorgt.

15. Elektropneumatische Betriebsbremseinrichtung nach einem der Ansprüche 10 bis 14, **dadurch gekennzeichnet, dass** die Mittel (ECU, 52, 68; 76, 78, 102) zur Erzeugung der zweiten Betätigungskraft wenigstens einen elektrischen, elektrohydraulischen oder elektropneumatischen Aktuator (52, 68; 76, 78) beinhalten.

16. Elektropneumatische Betriebsbremseinrichtung nach Anspruch 15, **dadurch gekennzeichnet, dass** die Mittel (ECU, 52, 68; 76, 78, 102) zur Erzeugung der zweiten Betätigungskraft wenigstens eine elektropneumatische Magnetventileinrichtung (52, 68; 76, 78) beinhalten, welche abhängig von den elektrischen Signalen zur Bildung der zweiten Betätigungskraft wenigstens einen pneumatischen Steuerdruck aussteuert, von welchem die zweite Betätigungskraft abhängig ist.

17. Elektropneumatische Betriebsbremseinrichtung nach Anspruch 16, **dadurch gekennzeichnet, dass** der von der wenigstens einen Magnetventileinrichtung (52, 68; 76, 78) ausgesteuerte Steuerdruck mittels einer Sensorik (102) gemessen und durch Abgleich mit einem Sollwert in der elektronischen Steuereinrichtung (ECU) geregelt wird, wobei die Sensorik (102), die Magnetventileinrichtung (52, 68; 76, 78) zusammen mit der elektronischen Steuereinrichtung (ECU) einen Steuerdruckregler zur Regelung des pneumatischen Steuerdrucks bilden.

18. Elektropneumatische Betriebsbremseinrichtung nach Anspruch 16 oder 17, **dadurch gekennzeichnet, dass** der pneumatische Steuerdruck in wenigstens eine Steuerkammer (22, 24) des elektropneumatischen Betriebsbremsventileinrichtung (1) einsteuerbar ist, welche von dem wenigstens einen Steuerkolben (4; 12) begrenzt ist, wobei die Steuerkammer (22, 24) derart angeordnet ist, dass sie bei Belüftung eine in Bezug zur ersten Betätigungskraft gleichsinnige oder gegensinnige zweite Betätigungskraft an dem wenigstens einen Steuerkolben (4; 12) bewirkt.

19. Elektropneumatische Betriebsbremseinrichtung nach Anspruch 18, **dadurch gekennzeichnet, dass** eine erste Steuerkammer (22) in Bezug zu dem wenigstens einen Steuerkolben (4; 12) derart angeordnet ist, dass durch Belüftung der ersten Steuerkammer (22) eine zweite, in Bezug auf die erste Betätigungskraft gleichsinnige Betätigungskraft auf den wenigstens einen Steuerkolben (4; 12) erzeugt wird, und dass eine zweite Steuerkammer (24) in Bezug zu dem wenigstens einen Steuerkolben (4; 12) derart angeordnet ist, dass durch Belüftung der zweiten Steuerkammer (24) eine zweite, in Bezug auf die erste Betätigungskraft gegensinnige Betätigungskraft auf den wenigstens einen Steuerkolben (4; 12) erzeugt wird.

20. Elektropneumatische Betriebsbremseinrichtung nach Anspruch 19, **dadurch gekennzeichnet, dass** die erste Steuerkammer (22) mittels einer ersten Magnetventileinrichtung (52) oder mittels eines ersten Steuerdruckreglers (ECU, 52, 102) und die zweite Steuerkammer (24), unabhängig davon, mittels einer zweiten Magnetventileinrichtung (68) oder mittels eines zweiten Steuerdruckreglers (ECU, 68, 102) be- oder entlüftbar ist.

21. Elektropneumatische Betriebsbremseinrichtung nach einem der Ansprüche 10 bis 20, **dadurch gekennzeichnet, dass** Sensormittel (67, 102) vorgesehen sind, durch welche die auf den wenigstens einen Steuerkolben (4; 12) wirkende zweite Betätigungskraft, ein von der zweiten Betätigungskraft herrührender Betätigungsweg des wenigstens einen Steuerkolbens (4; 12) und/oder eine die zweite Betätigungskraft erzeugende Größe als Ist-Größe gemessen wird, sowie Regelungs- und Stellmittel (ECU, 52, 68; 76, 78), durch welche die Ist-Größe mit einer Soll-Größe im Sinne einer Regelung abgeglichen wird.

22. Fahrzeug mit einer elektro-pneumatischen Betriebsbremseinrichtung nach einem der Ansprüche 10 bis 21.

## Claims

1. A method for controlling an electro-pneumatic service brake device (124) actuated by an electro-pneumatic service brake valve device (1), in particular for controlling an electronic brake system (EBS) of a vehicle, the electro-pneumatic service brake valve device (1) having a service brake actuating element (10) and
a) having, in at least one electrical service brake circuit of the electro-pneumatic service brake device (124), at least one electrical channel (130) with at least one electrical brake signal transmitter (67), which can be actuated by the service brake actuating element (10) on the basis of a driver braking request in order to adjust actuation signals dependent on actuation, and at least one electronic control unit (FBM-ECU) that receives the actuation signals and that inputs braking request signals into the electronic brake control unit (EBS-ECU) of the at least one electrical service brake circuit dependent on the actuation signals, this electronic brake control unit (EBS-ECU) activating electro-pneumatic modulators (114, 116) of the at least one electrical service brake circuit in order to generate a pneumatic brake pressure or brake control pressure for pneumatic wheel brake actuators (118, 120), and
b) having, in at least one pneumatic service brake circuit of the electro-pneumatic service brake device (124), at least one pneumatic channel (132, 134) in which at least one control piston (4, 12) of the service brake valve device (1) is loaded with a first actuating force by actuating the service brake actuating element (10) on the basis of a driver braking request, and the control piston (4; 12) directly or indirectly controls at least one double-seat valve (34), which comprises an inlet seat (64) and an outlet seat (32), of the service brake valve device (1) in order to generate a pneumatic brake pressure or brake control pressure for the pneumatic wheel brake actuators (118, 120), **characterised in that**
c) in the presence of a braking request independent of the driver request, the at least one control piston (4; 12) of the service brake valve device (1) is loaded with a second actuating force in addition to the first actuating force, or by a second actuating force instead of the first actuating force, this second actuating force acting on the at least one control piston (4; 12) in parallel with and in the same direction as or in the opposite direction to the first actuating force and being generated independently of a driver braking request on the basis of electrical signals output by the electronic control unit (FBM-ECU) of the service brake valve device (1).

2. A method according to claim 1, **characterised in that** the second actuating force is generated electro-pneumatically, electro-hydraulically and/or electromechanically on the basis of electrical signals output by the electronic control unit (FBM-ECU) of the service brake valve device (1).

3. A method according to any one of the preceding claims, **characterised in that** the second actuating force acting on the at least one control piston (4; 12), the actuation travel of the at least one control piston (4; 12) caused by the second actuating force, and/or a variable that generates the second actuating force are all measured as actual variables and compared with setpoint variables in a closed-loop control process.

4. A method according to any one of the preceding claims, **characterised in that** the second actuating force is generated pneumatically by means of an electro-pneumatic solenoid valve device (52, 68; 76, 78) controlled by the electronic control unit (ECU) of the service brake valve device (1) **in that** a control pressure output by the at least one electro-pneumatic solenoid valve device (52, 68; 76, 78) on a signal from the electronic control unit (FBM-ECU) of the service brake valve device (1) acts directly or indirectly on the at least one control piston (4, 12).

5. A method according to claim 4, **characterised in that** the control pressure is closed-loop controlled.

6. A method according to any one of the preceding claims, **characterised** the second actuating force is generated in the presence of a braking request if a fault or a failure in the electrical service brake circuit and/or, in particular, in the electronic brake control unit (EBS-ECU) of the electro-pneumatic service brake device (124) has been detected.

7. A method according to claim 6, **characterised in that** a failure or a fault in the electrical service brake circuit and/or in the electronic brake control unit (EBS-ECU) of the electro-pneumatic service brake device (124) is detected in the course of self-monitoring carried out by the electronic brake control unit (EBS-ECU) of the electro-pneumatic service brake device (124) itself or in the course of external monitoring carried out by the electronic control unit (FBM-ECU) of the electro-pneumatic service brake valve device (1).

8. A method according to claim 6 or 7, **characterised in that** when a failure or a fault is detected in the electrical service brake circuit and/or the electronic brake control unit (EBS-ECU) of the electro-pneumatic service brake device (124), a brake pressure or a brake control pressure is generated and input into the pneumatic wheel brake actuators (118, 120) on the basis of the second actuating force in the at least one pneumatic service brake circuit using the at least one pneumatic channel (132, 134) of the service brake valve device (1).

9. A method according to any one of claims 6 to 8, **characterised in that** the electronic brake control unit (EBS-ECU) of the electro-pneumatic service brake device (124) is supplied with electrical energy by a first electrical energy source (126) that is independent of a second electrical energy source (128) that supplies the electronic control unit (FBM-ECU) of the service brake valve device (1) with electrical energy.

10. An electro-pneumatic service brake device (124), in particular an electronic brake system (EBS) of a vehicle, that has an electro-pneumatic service brake valve device (1) and at least one electronic brake control unit (EBS-ECU) for controlling electro-pneumatic wheel brake actuators (118, 120), the electro-pneumatic service brake valve device (1) having a service brake actuating element (10) and
a) having, in at least one electrical service brake circuit of the electro-pneumatic service brake device (124), at least one electrical channel (130) with at least one electrical brake signal transmitter (67), which can be actuated by the service brake actuating element (10) on the basis of a driver braking request in order to adjust actuation signals dependent on actuation, and at least one electronic control unit (FBM-ECU) that receives the actuation signals and that inputs braking request signals into the electronic brake control unit (EBS-ECU) of the at least one electrical service brake circuit dependent on the actuation signals, this electronic brake control unit (EBS-ECU) activating electro-pneumatic modulators (114, 116) of the at least one electrical service brake circuit in order to generate a pneumatic brake pressure or brake control pressure for pneumatic wheel brake actuators (118, 120), and
b) having, in at least one pneumatic service brake circuit of the electro-pneumatic service brake device (124), at least one pneumatic channel (132, 134) in which at least one control piston (4, 12) of the service brake valve device (1) is loaded with a first actuating force by actuating the service brake actuating element (10) on the basis of a driver braking request, and the control piston (4; 12) directly or indirectly controls at least one double-seat valve (34), which comprises an inlet seat (64) and an outlet seat (32), of the service brake valve device (1) in order to generate a pneumatic brake pressure or brake control pressure for the pneumatic wheel brake actuators (118, 120),
**characterised in that**
c) means (ECU, 52, 68; 76, 78, 102) containing the electronic control unit (FBM-ECU) of the electro-pneumatic service brake valve device (1) are provided for generating a second actuating force independently of a driver braking request, in the presence of a braking request independent of the driver request this second actuating force acting on the at least one control piston (4; 12) in parallel with and in the same direction as or in the opposite direction to the first actuating force.

11. An electro-pneumatic service brake device according to claim 10, **characterised in that** the electronic control unit (FBM-ECU) of the service brake valve device (1) has an interface (13) by means of which it is possible to input signals on the basis of which the electronic control unit (FBM-ECU) of the service brake valve device (1) forms electrical signals in order to generate the second actuating force.

12. An electro-pneumatic service brake device according to claim 11, **characterised in that** the brake control unit (EBS-ECU) of the electro-pneumatic service brake device (124) is connected to the interface (13) of the electronic control unit (FBM-ECU) of the service brake valve device (1) via an electrical communication path (122), in particular via a data bus.

13. An electro-pneumatic service brake device according to claim 12, **characterised in that** the electronic control unit (FBM-ECU) of the service brake valve device (1) is designed in such a way that, on one hand, it inputs braking request signals generated by actuating the brake actuating element (10) via the interface (13) into the electronic brake control unit (EBS-ECU) and, on the other, in the presence of the braking request independent of the driver request, generates the electrical signals for generating the second actuating force if the signals input via the interface (13) represent a fault or a failure in the electrical brake circuit and, in particular, a fault or a failure in the brake control unit (EBS-ECU) of the electro-pneumatic service brake device (124).

14. An electro-pneumatic service brake device according to claim 13, **characterised in that** the electronic brake control unit (EBS-ECU) of the electro-pneumatic service brake device (124) is supplied with electrical energy by a first electrical energy source (126) that is independent of a second electrical energy source (128) that supplies the electronic control unit (FBM-ECU) of the service brake valve device (1) with electrical energy.

15. An electro-pneumatic service brake device according to any one of claims 10 to 14, **characterised in that** the means (ECU, 52, 68; 76, 78, 102) of generating the second actuating force contain at least one electrical, electro-hydraulic or electro-pneumatic actuator (52, 68; 76, 78).

16. An electro-pneumatic service brake device according to claim 15, **characterised in that** the means (ECU, 52, 68; 76, 78, 102) of generating the second actuating force contain at least one electro-pneumatic solenoid valve device (52, 68; 76, 78) that outputs at least one pneumatic control pressure that is dependent on the electrical signals for forming the second actuating force and on which the second actuating force is dependent.

17. An electro-pneumatic service brake device according to claim 16, **characterised in that** the control pressure output by the at least one solenoid valve device (52, 68; 76, 78) is measured by means of a sensor system (102) and closed-loop controlled by comparison with a setpoint value in the electronic control unit (ECU), the sensor system (102) and the solenoid valve device (52, 68; 76, 78) together with the electronic control unit (ECU) forming a control pressure closed-loop controller for the closed-loop control of the pneumatic control pressure.

18. An electro-pneumatic service brake device according to claim 16 or 17, **characterised in that** the pneumatic control pressure can be input into at least one control chamber (22, 24) of the electro-pneumatic service brake valve device (1) that is bounded by the at least one control piston (4; 12), the control chamber (22, 24) being arranged in such a way that, when aerated, it applies a second actuating force that acts in the same direction as or in the opposite direction to the first actuating force at the at least one control piston (4; 12).

19. An electro-pneumatic service brake device according to claim 18, **characterised in that** a first control chamber (22) is arranged in relation to the at least one control piston (4; 12) in such a way that ventilating the first control chamber (22) generates a second actuating force that acts in the same direction as the first actuating force on the at least one control piston (4; 12), and that a second control chamber (24) is arranged in relation to the at least one control piston (4; 12) in such a way that ventilating the second control chamber (24) generates a second actuating force that acts in the opposite direction to the first actuating force on the at least one control piston (4; 12).

20. An electro-pneumatic service brake device according to claim 19, **characterised in that** the first control chamber (22) can be aerated or vented by means of a first solenoid valve device (52) or by means of a first control pressure closed-loop controller (ECU, 52, 102), and the second control chamber (24) can be aerated or vented independently thereof by means of a second solenoid valve device (68) or by means of a second control pressure closed-loop controller (ECU, 68, 102).

21. An electro-pneumatic service brake device according to any one of claims 10 to 20, **characterised in that** there are provided sensor means (67, 102) by means of which the second actuating force acting on the at least one control piston (4; 12), the actuation travel of the at least one control piston (4; 12) caused by the second actuating force and/or a variable that generates the second actuating force are all measured as actual variables, and closed-loop control and actuating means (ECU, 52, 68; 76, 78) by means of which the actual variable is compared with a setpoint variable in a closed-loop control process.

22. A vehicle having an electro-pneumatic service brake device according to any one of claims 10 to 21.

## Revendications

1. Procédé de commande d'un dispositif (124) électro pneumatique de frein de service, actionné par un dispositif (1) électro pneumatique de soupape de frein de service, notamment d'un système (EBS) électronique de frein d'un véhicule, le dispositif (1) électro pneumatique de soupape de frein de service ayant un organe (10) d'actionnement de frein de service, ainsi que
a) au sein d'au moins un circuit électrique de frein de service du dispositif (124) électro pneumatique de frein de service, au moins un canal (130) électrique, ayant au moins un indicateur (67) électrique de valeur de frein, pouvant être actionné par l'organe (10) d'actionnement de frein de service, sur la base d'une requête de frein d'un conducteur, afin d'émettre, en fonction de l'actionnement, des signaux d'actionnement, et ayant au moins un dispositif (FBM-ECU) électronique de commande recevant les signaux d'actionnement, qui, en fonction des signaux d'actionnement, entre des signaux de demande de frein dans le dispositif (EBS-ECU) électronique de commande de frein du au moins un circuit électrique de frein de service, qui commande des modulateurs (114, 116) électro pneumatiques du au moins un circuit électrique de frein de service, afin de produire une pression de frein pneumatique ou une pression de frein de commande pour des actionneurs (118, 120) pneumatiques de frein de roue, ainsi que
b) au sein d'au moins un circuit pneumatique de frein de service du dispositif (124) électro pneumatique de frein de service, au moins un canal (132, 134) pneumatique, pour lequel, par actionnement de l'organe (10) d'actionnement du frein de service, sur la base d'une demande de frein d'un conducteur, au moins un piston (4, 12) de commande du dispositif (1) de soupape de frein de service est chargé d'une première force d'actionnement et le piston (4 ; 12) de commande commande directement ou indirectement au moins une soupape (34) à siège double, comportant un siège (64) d'entrée et un siège (32) de sortie, du dispositif (1) de soupape de frein de service, afin de produire une pression de frein pneumatique ou une pression de frein de commande pour les actionneurs (118, 120) pneumatiques de frein de roue, **caractérisé en ce que**
c) le au moins un piston (4 ; 12) de commande du dispositif (1) de soupape de frein de service est soumis, en présence d'une demande de frein indépendante du souhait du conducteur, outre à la première force d'actionnement, à une deuxième force d'actionnement ou, au lieu de la première force d'actionnement, à une deuxième force d'actionnement, qui, par rapport à la première force d'actionnement, agit parallèlement et dans le même sens ou dans le sens contraire sur le au moins un piston (4 ; 12) de commande et qui est produite indépendamment d'une demande de frein du conducteur, sur la base de signaux électriques émis par le dispositif (FBM-ECU) électronique de commande du dispositif (1) de soupape de frein de service.

2. Procédé suivant la revendication 1, **caractérisé en ce que** la deuxième force d'actionnement est produite électro pneumatiquement, électro hydrauliquement et/ou électro mécaniquement sur la base de signaux électriques émis par le dispositif (FBM-ECU) électronique de commande du dispositif (1) de soupape de frein de service.

3. Procédé suivant l'une des revendications précédentes, **caractérisé en ce que** la deuxième force d'actionnement, s'appliquant au au moins un piston (4 ; 12) de commande, un trajet d'actionnement provenant de la deuxième force d'actionnement du au moins un piston (4 ; 12) de commande et/ou une grandeur produisant la deuxième force d'actionnement est mesurée en tant que grandeur réelle et est égalisée à une grandeur de consigne en vue d'une régulation.

4. Procédé suivant l'une des revendications précédentes, **caractérisé en ce que** la deuxième force d'actionnement est produite pneumatiquement au moyen d'un dispositif (52, 68 ; 76, 78) électro pneumatique d'électrovanne commandé par le dispositif (ECU) électronique de commande du dispositif (1) de soupape de frein de service, par le fait qu'une pression de commande émise par le au moins un dispositif (52, 68 ; 76, 78) électro pneumatique d'électrovanne sur un signal du dispositif (FBM-ECU) électronique de commande du dispositif (1) de soupape de frein de service agit directement ou indirectement sur le au moins un piston (4 ; 12) de commande.

5. Procédé suivant la revendication 4, **caractérisé en ce que** l'on règle la pression de commande.

6. Procédé suivant l'une des revendications précédentes, **caractérisé en ce que** l'on produit la deuxième force d'actionnement en présence d'une demande de frein, si a été constaté un défaut ou une défaillance du circuit électronique de frein de service et/ou notamment du dispositif (EBS-ECU) électronique de commande de frein du dispositif (124) électro pneumatique de frein de service.

7. Procédé suivant la revendication 6, **caractérisé en ce que** l'on constate une défaillance ou un défaut du circuit électrique de frein de service et/ou du dispositif (EBS-ECU) électronique de commande de frein du dispositif (124) électro pneumatique de frein de service, dans le cadre d'un auto-contrôle par le dispositif (EBS-ECU) électronique de commande de frein du dispositif (124) électro pneumatique de frein de service soi-même ou dans le cadre d'un contrôle extérieur par le dispositif (FBM-ECU) électronique de commande du dispositif (1) électro pneumatique de soupape de frein de service.

8. Procédé suivant la revendication 6 ou 7, **caractérisé en ce que**, lorsqu'une défaillance ou un défaut du circuit électrique de frein de service et/ou du dispositif (EBS-ECU) électronique de commande de frein du dispositif (124) électro pneumatique de frein de service est constaté, à l'aide du au moins un canal (132, 134) pneumatique du dispositif (1) de soupape de frein de service, on produit, dans le au moins un circuit pneumatique de frein de service, sur la base de la deuxième force d'actionnement, une pression de frein ou une pression de commande de frein et on l'entre dans les actionneurs (118, 120) pneumatiques de frein de roue.

9. Procédé suivant l'une des revendications 6 à 8, **caractérisé en ce que** l'on alimente en énergie électrique le dispositif (EBS-ECU) électronique de commande de frein du dispositif (124) électro pneumatique de frein de service par une première source (126) d'énergie électrique, qui est indépendante d'une deuxième source (128) d'énergie électrique, qui alimente en énergie électrique le dispositif (FBM-ECU) électronique de commande du dispositif (1) de soupape de frein de service.

10. Dispositif (124) électro pneumatique de frein de service d'un véhicule, notamment système électronique (EBS) de frein d'un véhicule, qui a un dispositif (1) électro pneumatique de soupape de frein de service, ainsi qu'au moins un dispositif (EBS-ECU) électronique de commande de frein pour la commande d'actionneurs (118, 120) électro pneumatiques de frein de roue, le dispositif (1) électro pneumatique de soupape de frein de service ayant un organe (10) d'actionnement de frein de service, ainsi que
a) au sein d'au moins un circuit électrique de frein de service du dispositif (124) électro pneumatique de frein de service, au moins un canal (130) électrique, ayant au moins un indicateur (67) électrique de valeur de frein, pouvant être actionné par l'organe (10) d'actionnement de frein de service, sur la base d'une requête de frein d'un conducteur, afin d'émettre, en fonction de l'actionnement, des signaux d'actionnement, et ayant au moins un dispositif (FBM-ECU) électronique de commande recevant les signaux d'actionnement, qui, en fonction des signaux d'actionnement, entre des signaux de demande de frein dans le dispositif (EBS-ECU) électronique de commande de frein du au moins un circuit électrique de frein de service, qui commande des modulateurs (114, 116) électro pneumatiques du au moins un circuit électrique de frein de service, afin de produire une pression de frein pneumatique ou une pression de frein de commande pour des actionneurs (118, 120) pneumatiques de frein de roue, ainsi que
b) au sein d'au moins un circuit pneumatique de frein de service du dispositif électro pneumatique de frein de service, au moins un canal (132, 134) pneumatique, pour lequel, par actionnement de l'organe (10) d'actionnement du frein de service, sur la base d'une demande de frein d'un conducteur, au moins un piston (4, 12) de commande du dispositif (1) de soupape de frein de service est chargé d'une première force d'actionnement et le piston (4 ; 12) de commande commande directement ou indirectement au moins une soupape (34) à siège double, comportant un siège (64) d'entrée et un siège (32) de sortie, du dispositif (1) de soupape de frein de service, afin de produire une pression de frein pneumatique ou une pression de frein de commande pour les actionneurs (118, 120) pneumatiques de frein de roue,
**caractérisé en ce que**
c) il est prévu des moyens (ECU, 52, 68 ; 76, 78, 102) contenant le dispositif (FBM-ECU) électronique de commande du dispositif (1) électro pneumatique de soupape de frein de service pour produire une deuxième force d'actionnement indépendamment d'une demande de frein d'un conducteur, force qui, en présence d'une demande de frein indépendante d'un souhait du conducteur, s'applique au au moins un piston (4 ; 12) de commande par rapport à la première force d'actionnement, parallèlement et dans le même sens ou en sens contraire.

11. Dispositif électro pneumatique de frein de service suivant la revendication 10, **caractérisé en ce que** le dispositif (FBM-ECU) électronique de commande du dispositif (1) de soupape de frein de service a une interface (13), par laquelle des signaux peuvent être entrés, sur la base desquels le dispositif (FBM-ECU) électronique de commande du dispositif (1) de soupape de frein de service forme des signaux électriques de production de la deuxième force d'actionnement.

12. Dispositif électro pneumatique de frein de service suivant la revendication 11, **caractérisé en ce que** le dispositif (EBS-ECU) de commande de frein du dispositif (124) électro pneumatique de frein de service est raccordé par un trajet (122) électrique de communication, notamment par un bus de données, à l'interface (13) du dispositif (FBM-ECU) électronique de commande du dispositif (1) de soupape de frein de service.

13. Dispositif électro pneumatique de frein de service suivant la revendication 12, **caractérisé en ce que** le dispositif (FBM-ECU) électronique de commande du dispositif (1) de soupape de frein de service est constitué d'une part pour entrer dans le dispositif (EBS-ECU) électronique de commande des signaux de demande de frein produits par l'intermédiaire de l'interface (13) par actionnement de l'organe (10) d'actionnement de frein, et d'autre part, en présence de la demande de frein indépendante du souhait du conducteur, pour produire les signaux électriques de production de la deuxième force d'actionnement, si il est entré, par l'interface (13), des signaux, qui représentent un défaut ou une défaillance du circuit électrique de frein et notamment un défaut ou une défaillance du dispositif (EBS-ECU) de commande de frein du dispositif (124) électro pneumatique de frein de service.

14. Dispositif électro pneumatique de frein de service suivant la revendication 13, **caractérisé en ce que** l'on alimente en énergie électrique le dispositif (EBS-ECU) électronique de commande de frein du dispositif (124) électro pneumatique de frein de service par une première source (126) d'énergie électrique, qui est indépendante d'une deuxième source (128) d'énergie électrique, qui alimente en énergie électrique le dispositif (FBM-ECU) électronique de commande du dispositif (1) de soupape de frein de service.

15. Dispositif électro pneumatique de frein de service suivant l'une des revendications 10 à 14, **caractérisé en ce que** les moyens (ECU, 52, 68 ; 76, 78, 102) de production de la deuxième force d'actionnement comportent au moins un actionneur (52, 68 ; 76, 78) électrique, électrohydraulique, ou électro pneumatique.

16. Dispositif électro pneumatique de frein de service suivant la revendication 15, **caractérisé en ce que** les moyens (ECU, 52, 68 ; 76, 78, 102) de production de la deuxième force d'actionnement comportent au moins un dispositif (52, 68 ; 76, 78) électro pneumatique d'électrovanne, qui, en fonction des signaux électriques de production de la deuxième force d'actionnement, commande au moins une pression pneumatique de commande, dont dépend la deuxième force d'actionnement.

17. Dispositif électro pneumatique de frein de service suivant la revendication 16, **caractérisé en ce que** la pression de commande, commandée par le au moins un dispositif (52, 68 ; 76, 78) d'électrovanne, est mesurée au moyen d'un système (102) de capteur et est réglée par égalisation à une valeur de consigne dans le dispositif (ECU) électronique de commande, le système (102) de capteur, le dispositif (52, 68 ; 76, 78) d'électrovanne formant ensemble, avec le dispositif (ECU) électronique de commande, un régleur de pression de commande pour régler la pression de commande pneumatique.

18. Dispositif électro pneumatique de frein de service suivant la revendication 16 ou 17, **caractérisé en ce que** la pression de commande pneumatique peut être commandée dans au moins une chambre (22, 24) de commande du dispositif (1) électro pneumatique de soupape de frein de service, qui est délimitée par le au moins un piston (4 ; 12) de commande, la chambre (22, 24) de commande étant disposée de manière à appliquer, lorsqu'elle est alimentée en air, au au moins un piston (4 ; 12) de commande, une deuxième force d'actionnement de même sens que la première force d'actionnement ou de sens contraire à celle-ci.

19. Dispositif électro pneumatique de frein de service suivant la revendication 18, **caractérisé en ce qu'**une première chambre (22) de commande est disposée, par rapport au au moins un piston (4 ; 12) de commande, de manière à ce que, par alimentation en air de la première chambre (22) de commande, il est produit, sur le au moins un piston (4 ; 12) de commande, une deuxième force d'actionnement de même sens que la première force d'actionnement et **en ce qu'**il est disposé une deuxième chambre (24) de commande, par rapport au au moins un piston (4 ; 12) de commande, de manière à ce que, par alimentation en air de la deuxième chambre (24) de commande, il soit appliqué au au moins un piston (4 ; 12) de commande une deuxième force d'actionnement de sens contraire à la première force d'actionnement.

20. Dispositif électro pneumatique de frein de service suivant la revendication 19, **caractérisé en ce que** la première chambre (22) de commande peut être alimentée en air ou être purgée au moyen d'un premier dispositif (52) à électrovanne ou au moyen d'un premier régleur (ECU, 52, 102) de pression de commande et la deuxième chambre (24) de commande, indépendamment de cela, au moyen d'un deuxième dispositif (68) à électrovanne ou au moyen d'un deuxième régleur (ECU, 68, 102) de pression de commande.

21. Dispositif électro pneumatique de frein de service suivant l'une des revendications 10 à 20, **caractérisé en ce qu'**il est prévu des moyens (67, 102) de capteur, par lesquels la deuxième force d'actionnement s'appliquant au au moins un piston (4 ; 12) de commande, un trajet d'actionnement provenant de la deuxième force d'actionnement du au moins un piston (4 ; 12) de commande et/ou une grandeur produisant la deuxième force d'actionnement est mesurée comme grandeur réelle, ainsi que des moyens (ECU, 52, 68 ; 76, 78) de régulation et de réglage, par lesquels la grandeur réelle est égalisée à une grandeur de consigne en vue d'une régulation.

22. Véhicule ayant un dispositif électro pneumatique de frein de service suivant l'une des revendications 10 à 21.
